# EUROPEAN PATENT SPECIFICATION

(11) **EP 4 276 961 B1**
(45) Date of publication and mention of the grant of the patent: **14.10.2026**
(21) Application number: 22898751.7
(22) Date of filing: 19.07.2022
(51) Int. Cl.: H01M 10/04, G05B 19/418, H01M 10/058

(54) **METHOD AND DEVICE FOR SIMULATION OF LAMINATION AND STACK DEVICE FOR SECONDARY BATTERY PRODUCTION**
VERFAHREN UND VORRICHTUNG ZUR SIMULATION VON LAMINATION UND STAPELVORRICHTUNG ZUR HERSTELLUNG VON SEKUNDÄRBATTERIE
PROCÉDÉ ET DISPOSITIF DE SIMULATION DE DISPOSITIF DE STRATIFICATION ET D'EMPILEMENT POUR LA PRODUCTION DE BATTERIES SECONDAIRES

(30) Priority: 24.11.2021 KR 20210163789
(43) Date of publication of application: 15.11.2023
(73) Proprietor: LG Energy Solution, Ltd., Seoul 07335 (KR)
(72) Inventor: JUNG, Daewoon, Daejeon 34122 (KR); KIM, Han Seung, Daejeon 34122 (KR); KIM, Nam Hyuck, Daejeon 34122 (KR); KIM, Youngduk, Daejeon 34122 (KR); JEON, Su Ho, Daejeon 34122 (KR)
(74) Representative: BCKIP Part mbB
(86) International application number: PCT/KR2022/010546
(87) International publication number: WO 2023/096066

(56) References cited:
- EP-A1- 4 261 634
- WO-A1-2009/103089
- CN-B- 110 534 814
- KR-A- 20180 061 872
- KR-B1- 101 795 830
- KR-B1- 101 935 054
- KR-B1- 102 107 226
- US-A1- 2014 172 403
- US-A1- 2021 043 011

## Description

### TECHNICAL FIELD

The present disclosure generally relates to a simulation method and apparatus of a lamination and stack apparatus for secondary battery production and the invention, more specifically, relates to a laminator simulation method and a simulation apparatus for secondary battery production, as well as a non-transitory computer-readable storage medium.

### BACKGROUND

Due to the recent growth of the electric vehicle market, the demand for developing and producing secondary batteries is rapidly increasing. The number of production plants for secondary battery production is also growing in response to the increase in demand for secondary batteries. However, the industry is experiencing a significant shortage of skilled workers for operating secondary battery production plants.

Meanwhile, in the past, training and education of new workers were carried out in such a way of learning a skill by watching experienced workers, but it became difficult to train and educate new workers for a long time due to the busy production schedule of secondary batteries. In addition, it is difficult to find a sufficient number of skilled workers due to the frequent resignation of workers. Also, even if a worker is trained in a general method of operating a factory, it is not easy for the worker to immediately respond to various defect situations that may occur during factory operation.

EP 4 261 634 A1 which constitutes prior art pursuant to Art. 54(3) EPC discloses a simulation apparatus for secondary battery production. This simulation method for secondary battery production performed by at least one processor includes: executing an apparatus operating unit including a 3D model apparatus related to secondary battery production, a facility operating unit including a plurality of adjustment parameters for determining operation of the 3D model apparatus, and a quality checking unit including quality information related to quality of a material produced by the 3D model apparatus, receiving at least one of first user action information obtained through the apparatus operating unit or first user condition information obtained through the facility operating unit, determining an operation of the 3D model apparatus based on at least one of the first user action information or the first user condition information obtained, and executing the operation of the 3D model apparatus included in the apparatus operating unit based on the determined operation.

US 2021/043011 A1 discloses an immersive ecosystem comprising a VR headset configured to display a 3D rendering to a user and sensor(s) configured to measure a user response to dynamic 3D asset(s) in the 3D rendering. The immersive ecosystem further comprises a processor, an AI engine, and a first non-transitory computer-readable storage medium encoded with program code executable for providing the 3D rendering to the VR headset. The AI engine is operably coupled to a second non-transitory computer-readable storage medium configured to store predetermined response values and time values for dynamic 3D assets. The AI engine comprises a third non-transitory computer-readable storage medium encoded with program code executable for receiving the measured user response, comparing the received user response to the predetermined response value at the predetermined time value, based on the comparison, modifying dynamic 3D asset(s), and communicating the modified dynamic 3D asset(s) to the processor for providing within 3D rendering.

### SUMMARY

The object of the present invention is to provide a laminator simulation method and a simulation apparatus for secondary battery production, as well as a computer-readable medium storing a computer program for improving secondary battery production.

This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

A simulation apparatus for secondary battery production according to the present invention includes: a memory configured to store at least one instruction; and at least one processor configured to execute the at least one instruction stored in the memory to perform operations including: receiving information associated with a user account of a user who uses the simulation apparatus for secondary battery production; when receiving the information associated with the user account, executing an apparatus operating unit including a 3D lamination and stack (L&S) apparatus related to secondary battery production, a facility operating unit including a plurality of adjustment parameters for determining operation of the 3D L&S apparatus, and a quality checking unit including quality information related to quality of a mono-cell produced by the 3D L&S apparatus, obtaining at least one of first user action information obtained through the apparatus operating unit or first user condition information obtained through the facility operating unit, determining an operation of the 3D L&S apparatus based on at least one of the first user action information and the first user condition information, and executing an operation of sealing and cutting a plurality of electrodes and separators related to the 3D L&S apparatus based on the determined operation of the 3D L&S apparatus.

According to an embodiment of the present disclosure, the operations may further include: determining one or more quality parameters for determining the quality of the mono-cell produced by the 3D L&S apparatus; upon executing the operation of the 3D L&S apparatus, calculating a value corresponding to each of the one or more quality parameters determined based on the operation of the executed 3D L&S apparatus; and generating quality information related to the quality of the mono-cell produced by the 3D L&S apparatus based on the calculated value corresponding to each of the one or more quality parameters.

According to the present invention, the operations include: receiving a test request for operational capability of the L&S apparatus from the user, when receiving the test request, determining one or more defect scenarios among a plurality of defect scenarios related to a malfunction of the 3D L&S apparatus, and modifying at least one of the operation of the 3D L&S apparatus or the quality information related to the quality of the mono-cell based on the determined one or more defect scenarios.

According to the present invention, the plurality of defect scenarios include a cutting defect scenario, and the operations further include: changing a value of at least one graph of a Tap Position Cathode (TPC) graph and a Tap Position Anode (TPA) graph indicating a cutting position, included in the quality information, to a defect range and changing at least a partial area included in a cutting image to a predetermined area indicating a cutting defect, when the determined one or more defect scenarios include the cutting defect scenario.

According to an embodiment of the present disclosure, the plurality of adjustment parameters may include a cutting offset parameter related to a cutting timing of the 3D L&S apparatus, and the operations may further include: receiving second user condition information of changing a value of the cutting offset parameter, correcting the cutting image and the value of the at least one graph of the TPC graph and the TPA graph in response to the received second user condition information, determining, based on the corrected cutting image and the corrected value of the at least one graph of the TPC graph or the TPA graph, whether the cutting defect scenario is resolved, and upon determining that the cutting defect scenario is resolved, performing a test evaluation of the user account for the cutting defect scenario.

According to the present invention, the plurality of defect scenarios include an x-axis mismatch defect scenario, and the operations further include: changing an x-axis match image and values of a graph representing whether an x-axis matching is made, included in the quality information, to lie within a defect range when the determined one or more defect scenarios include the x-axis mismatch defect scenario.

According to an embodiment of the present disclosure, the plurality of adjustment parameters may include an x-axis offset parameter for changing an x-axis value of at least part of an upper electrode and a lower electrode included in the plurality of electrodes and the separators, and the operations may further include: receiving third user condition information for changing the x-axis offset parameter, determining, correcting the x-axis match image and the values of the graph representing whether x-axis matching is made in response to the received third user condition information, determining, based on the corrected x-axis matching image and the corrected values of the graph representing whether x-axis matching is made, whether the x-axis mismatch defect scenario has been resolved, and upon determining that the x-axis mismatch defect scenario is resolved, performing a test evaluation of the user account for the x-axis mismatch defect scenario.

According to the present invention, the plurality of defect scenarios include a y-axis mismatch defect scenario, and the operations further include: changing a y-axis match image and values of a graph representing whether y-axis matching is made, included in the quality information, to lie within a defect range when the determined one or more defect scenarios include the y-axis mismatch defect scenario.

According to an embodiment of the present disclosure, the plurality of adjustment parameters may include a y-axis offset parameter for changing a y-axis value of at least part of an upper electrode and a lower electrode included in the plurality of electrodes and an upper separator and a lower separator included in the separators, and the operations may further include: receiving fourth user condition information for changing the y-axis offset parameter, correcting the y-axis match image and the values of the graph representing whether y-axis matching is made in response to the received fourth user condition information, determining, based on the corrected y-axis matching image and the corrected values of the graph representing whether y-axis matching is made, whether the y-axis mismatch defect scenario has been resolved, and upon determining that the y-axis mismatch defect scenario is resolved, performing a test evaluation of the user account for the y-axis mismatch defect scenario.

According to the present invention, the plurality of defect scenarios may include a path-line deviation defect scenario in which the separator deviates from a path line, and the operations may further include: changing values of a graph representing whether a deviation from the path line occurs, included in the quality information, to lie within a defect range when the determined one or more defect scenarios include the path-line deviation defect scenario.

According to an embodiment of the present disclosure, the plurality of adjustment parameters may include a separator offset parameter for changing a y-axis value of the separator, and the operations may further include: receiving fifth user condition information of changing the separator offset parameter, correcting values of the graph representing whether a deviation from the path line occurs in response to the received fifth user condition information, determining, based on the corrected value of the graph representing whether a deviation from the path line occurs, whether the path-line deviation defect scenario is resolved, and upon determining that the path-line deviation defect scenario is resolved, performing a test evaluation of the user account for the path-line deviation defect scenario.

According to an embodiment of the present disclosure, the operations may further include: determining whether the plurality of defect scenarios associated with a malfunction of the 3D L&S apparatus are resolved by the user account, and upon determining that the plurality of defect scenarios are resolved by the user account, determining whether the user passes the test based on operational capability information of the user account generated corresponding to each of the defect scenarios included in the plurality of defect scenarios.

A laminator simulation method for secondary battery production according to the present invention, being performed by at least one processor, includes: receiving information associated with a user account of a user who uses a simulation apparatus for secondary battery production; when receiving the information associated with the user account, executing an apparatus operating unit including a 3D lamination and stack (L&S) apparatus related to secondary battery production, a facility operating unit including a plurality of adjustment parameters for determining operation of the 3D L&S apparatus, and a quality checking unit including quality information related to quality of a mono-cell produced by the 3D L&S apparatus, obtaining at least one of first user action information obtained through the apparatus operating unit or first user condition information obtained through the facility operating unit, determining the operation of the 3D L&S apparatus based on at least one of the first user action information or the first user condition information, and executing an operation of sealing and cutting a plurality of electrodes and separators related to the 3D L&S apparatus based on the determined operation of the 3D L&S apparatus.

According to an embodiment of the present disclosure, the method may further include: determining one or more quality parameters for determining the quality of the mono-cell produced by the 3D L&S apparatus; upon executing the operation of the 3D L&S apparatus, calculating a value corresponding to each of the one or more quality parameters determined based on the operation of the executed 3D L&S apparatus; and generating quality information related to the quality of the mono-cell produced by the 3D L&S apparatus based on the calculated value corresponding to each of the one or more quality parameters.

According to the present invention, the method further includes: receiving a test request for operational capability of the L&S apparatus from the user, when receiving the test request, determining one or more defect scenarios among a plurality of defect scenarios related to a malfunction of the 3D L&S apparatus, and modifying at least one of the operation of the 3D L&S apparatus or the quality information related to the quality of the mono-cell based on the determined one or more defect scenarios.

According to the present invention, the plurality of defect scenarios include a cutting defect scenario, and the modifying of the at least one of the operation of the 3D L&S apparatus and the quality information related to the quality of the mono-cell based on the determined one or more defect scenarios may include changing a value of at least one graph of a TPC (Tap Position Cathode) graph and a TPA (Tap Position Anode) graph indicating a cutting position, included in the quality information, to a defect range and changing at least a partial area included in a cutting image to a predetermined area indicating a cutting defect, when the determined one or more defect scenarios include the cutting defect scenario.

According to a laminator simulation method not specifically claimed embodiment of the present disclosure, the plurality of adjustment parameters may include a cutting offset parameter related to a cutting timing of the 3D L&S apparatus, and the method may further include: receiving second user condition information of changing a value of the cutting offset parameter, correcting the cutting image and the value of the at least one graph of the TPC graph and the TPA graph in response to the received second user condition information, determining, based on the corrected cutting image and the corrected value of the at least one graph of the TPC graph or the TPA graph, whether the cutting defect scenario is resolved, and upon determining that the cutting defect scenario is resolved, performing a test evaluation of the user account for the cutting defect scenario.

According to the present invention, the plurality of defect scenarios include an x-axis mismatch defect scenario, and the modifying of the at least one of the operation of the 3D L&S apparatus or the quality information related to the quality of the mono-cell based on the determined one or more defect scenarios may include changing an x-axis match image and values of a graph representing whether an x-axis matching is made, included in the quality information, to lie within a defect range when the determined one or more defect scenarios include the x-axis mismatch defect scenario.

According to a in the laminator simulation method not specifically claimed embodiment of the present disclosure, the plurality of adjustment parameters may include an x-axis offset parameter for changing an x-axis value of at least part of an upper electrode and a lower electrode included in the plurality of electrodes and the separators, and the method may further include: receiving third user condition information for changing the x-axis offset parameter, correcting the x-axis match image and the values of the graph representing whether x-axis matching is made in response to the received third user condition information, determining, based on the corrected x-axis matching image and the corrected values of the graph representing whether x-axis matching is made, whether the x-axis mismatch defect scenario has been resolved, and upon determining that the x-axis mismatch defect scenario is resolved, performing a test evaluation of the user account for the x-axis mismatch defect scenario.

According to the present invention, the plurality of defect scenarios include a y-axis mismatch defect scenario, and the modifying of the at least one of the operation of the 3D L&S apparatus and the quality information related to the quality of the mono-cell based on the determined one or more defect scenarios includes changing a y-axis match image and values of a graph representing whether y-axis matching is made, included in the quality information, to lie within a defect range when the determined one or more defect scenarios include the y-axis mismatch defect scenario.

According to a laminator simulation method not specifically claimed embodiment of the present disclosure, the plurality of adjustment parameters may include a y-axis offset parameter for changing a y-axis value of at least part of an upper electrode and a lower electrode included in the plurality of electrodes and an upper separator and a lower separator included in the separators, and the method may further include: receiving fourth user condition information for changing the y-axis offset parameter. determining, correcting the y-axis match image and the values of the graph representing whether y-axis matching is made in response to the received fourth user condition information. determining, based on the corrected y-axis matching image and the corrected values of the graph representing whether y-axis matching is made, whether the y-axis mismatch defect scenario has been resolved, and upon determining that the y-axis mismatch defect scenario is resolved, performing a test evaluation of the user account for the y-axis mismatch defect scenario.

According to the present invention, the plurality of defect scenarios include a path-line deviation defect scenario in which the separator deviates from a path line, and the modifying of the at least one of the operation of the 3D L&S apparatus or the quality information related to the quality of the mono-cell based on the determined one or more defect scenarios includes changing values of a graph representing whether a deviation from the path line occurs, included in the quality information, to lie within a defect range when the determined one or more defect scenarios include the path-line deviation defect scenario.

According to a laminator simulation method not specifically claimed embodiment of the present disclosure, the plurality of adjustment parameters may include a separator offset parameter for changing a y-axis value of the separator, and the method may further include: receiving fifth user condition information of changing the separator offset parameter, correcting values of the graph representing whether a deviation from the path line occurs in response to the received fifth user condition information, determining, based on the corrected value of the graph representing whether a deviation from the path line occurs, whether the path-line deviation defect scenario is resolved, and upon determining that the path-line deviation defect scenario is resolved, performing a test evaluation of the user account for the path-line deviation defect scenario.

According to an embodiment of the present disclosure, the method may further include: determining whether the plurality of defect scenarios associated with a malfunction of the 3D L&S apparatus are resolved by the user account, and upon determining that the plurality of defect scenarios are resolved by the user account, determining whether the user passes the test based on operational capability information of the user account generated corresponding to each of the defect scenarios included in the plurality of defect scenarios.

A non-transitory computer-readable medium according to the invention storing instructions for executing a laminator simulation method for secondary battery production is provided to execute the method according to one embodiment of the present disclosure in a computer.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### ADVANTAGEOUS EFFECTS

In various embodiments of the present disclosure, a user performing secondary battery production may perform training related to a method for operating a secondary battery production apparatus, a method for handling a defect situation, and so on through a simulation apparatus before being put into work; through training of the user, the loss due to the occurrence of defects may be considerably reduced so that the efficiency of the secondary battery production task may be improved effectively.

In various embodiments of the present disclosure, by generating a defect scenario based on error information in an actual apparatus, the simulation apparatus may effectively generate 8 training contents optimized for actual work environments.

In various embodiments of the present disclosure, a simulation apparatus may generate and provide a defect scenario having various values related to the malfunction of a secondary battery production apparatus to the user; accordingly, the user may deal with a malfunction situation that may occur in an actual apparatus without help from others and may effectively learn how to respond to various situations.

In various embodiments of the present disclosure, a user may easily learn how to operate a secondary battery production apparatus through the simulation progressed step by step according to the user's task skill level.

In various embodiments of the present disclosure, a user may easily identify and process a defect scenario for which the user lacks training; thus, the user may be trained only in the defect scenario for which the user has low work skills.

In various embodiments of the present disclosure, a user may effectively learn in advance how to respond to a problem that may occur in an L&S process, and the simulation apparatus may effectively determine whether the problem has been resolved based on the user's motion input or received.

In various embodiments of the present disclosure, a user may effectively improve the ability to respond to defects by training using a defect scenario generated based on a malfunction occurring in an actual work environment.

The technical effects of the present disclosure are not limited to the technical effects described above, and other technical effects not mentioned herein may be understood clearly by those with ordinary knowledge in the art (referred to as a "person with ordinary skills") to which the present disclosure belongs from the appended claims.

### BRIEF DESCRIPTION OF THE DRAWINGS

Embodiments of the present disclosure will be described with reference to the accompanying drawings described below, wherein similar reference numbers denote similar constituting elements, but the present disclosure is not limited thereto.
FIG. 1 illustrates an example in which a user uses a simulation apparatus according to an embodiment of the present disclosure.
FIG. 2 is a functional diagram illustrating an internal structure of a simulation apparatus according to an embodiment of the present disclosure.
FIG. 3 is a block diagram illustrating an example in which a simulation apparatus operates according to an embodiment of the present disclosure.
FIG. 4 illustrates an example of a display screen displayed or output on an apparatus operating unit according to an embodiment of the present disclosure.
FIG. 5 illustrates an example of a display screen displayed or output on an apparatus operating unit according to another embodiment of the present disclosure.
FIG. 6 illustrates an example of a display screen displayed or output on an apparatus operating unit according to yet another embodiment of the present disclosure.
FIG. 7 illustrates an example of a display screen displayed or output on an apparatus operating unit related to a 3D L&S apparatus according to an embodiment of the present disclosure.
FIG. 8 illustrates an example in which a cutting defect scenario has occurred according to an embodiment of the present disclosure.
FIG. 9 illustrates an example in which an x-axis mismatch defect scenario has occurred according to an embodiment of the present disclosure.
FIG. 10 illustrates an example in which a y-axis mismatch defect scenario has occurred according to an embodiment of the present disclosure.
FIG. 11 illustrates an example in which a defect scenario is generated according to an embodiment of the present disclosure.
FIG. 12 illustrates an example in which operational capability information and a test result are generated according to an embodiment of the present disclosure.
FIG. 13 illustrates an example of a simulation method for secondary battery production according to an embodiment of the present disclosure.
FIG. 14 illustrates an example of an L&S apparatus simulation method for secondary battery production according to an embodiment of the present disclosure.
FIG. 15 illustrates an example of a method for calculating a test result according to an embodiment of the present disclosure.
FIG. 16 illustrates an example of a method for generating a defect scenario according to an embodiment of the present disclosure.
FIG. 17 illustrates an exemplary computing device for performing the method and/or embodiments.

### DETAILED DESCRIPTION

In what follows, specifics for embodiment of the present disclosure will be described in detail with reference to appended drawings. However, in what follows, if a detailed description of well-known functions or configurations incorporated herein unnecessarily obscure the gist of the present disclosure, the detailed description thereof will be omitted.

In the accompanying drawings, identical or corresponding constituting elements are assigned the same reference numbers. Also, overlapping descriptions of the same or corresponding constituting elements may be omitted in the description of the embodiments below. However, even if descriptions regarding a constituting element are omitted, it should not be interpreted that the constituting element is not included in the corresponding embodiment.

The advantages and features of the present disclosure, and a method for achieving them will be clearly understood with reference to the embodiments described together with appended drawings. However, the present disclosure is not limited to the embodiments disclosed below but may be implemented in various other forms; the present embodiments are provided only to inform those skilled in the art completely of the technical scope of the present disclosure.

Terms used in the present disclosure will be briefly defined, and disclosed embodiments will be described in detail. Terms used in the present disclosure have been selected as much as possible from general terms relevant to the functions of the present disclosure and currently in wide use; however, the selection of terms may be varied depending on the intention of those persons skilled in the corresponding field, precedents, or emergence of new technologies. Also, in a particular case, some terms may be selected arbitrarily by the applicant, and in this case, detailed definitions of the terms will be provided in the corresponding description of the present disclosure. Therefore, the terms used in the present disclosure should be defined not simply by their apparent name but based on their meaning and context throughout the present disclosure.

In the present disclosure, a singular expression should be understood to include a plural expression unless the context explicitly indicates a singular expression. Also, a plural expression should be understood to include a singular expression unless the context explicitly indicates a plural expression. Throughout the disclosure, unless otherwise explicitly stated, if a particular element is said to include some particular element, it means that the former may further include other particular elements rather than exclude them.

The term "comprises" and/or "comprising" used in the present disclosure indicates the existence of features, steps, operations, components, and/or constituting elements; however, the term does not exclude addition of one or more other functions, steps, operations, components, constituting elements, and/or a combination thereof.

In the present disclosure, when a particular constituting element is referred to as being "coupled to," "combined with," "connected to," "related to," or as "responding to" any other constituting element, the particular constituting element may be directly coupled to, combined with, connected to, and/or related to, or may directly respond to the other constituting element; however, the present disclosure is not limited to the relationship. For example, there may be one or more intermediate constituting elements between a particular constituting element and another constituting element. Also, in the present disclosure, "and/or" may include one or more of the listed items or a combination of at least a portion of one or more of the listed items.

In the present disclosure, the terms such as "first" and "second" are introduced to distinguish one constituting element from the others, and thus the constituting element should not be limited by those terms. For example, a "first" constituting element may be used to indicate a constituting element in a form similar to or the same as a "second" constituting element.

In the present disclosure, a "secondary battery" may refer to the battery made using a material in which the redox process between a current and the material may be repeated several times. For example, to produce a secondary battery, processing such as mixing, coating, roll pressing, slitting, notching and drying, lamination, folding and stacking, lamination and stacking (L&S), packaging, charging and discharging, degassing, and characteristics inspection may be performed. In this case, separate production equipment (apparatus) for performing each process may be used. At this time, each production equipment may be operated according to adjustment parameters and configuration values set or changed by a user.

In the present disclosure, a "user" may refer to a worker who performs secondary battery production and operates secondary battery production apparatus and may include a user training through a simulation apparatus for secondary battery production apparatus. Also, a "user account" is an ID created to use the simulation apparatus or assigned to each user; the user may log into the simulation apparatus using the user account and perform a simulation, but the present disclosure is not limited thereto.

According to the invention, the "facility operating unit," "apparatus operating unit," and "quality checking unit" are software programs included in the simulation apparatus or displayed on an input/output device related to the simulation apparatus and/or an input/output device and may refer to a device and/or a program outputting an image or a video of a 3D model apparatus or receiving various inputs from a user and delivering the received inputs to the simulation apparatus.

In the present disclosure, the "3D model apparatus" is a virtual apparatus that implements actual secondary battery production apparatus, which may operate in a way that images, videos, or animations of the virtual apparatus are executed, modified, and/or corrected based on the information input by a user. In other words, the "operation of the 3D model apparatus" may include images, videos, and animations of a virtual apparatus executed, modified, and/or corrected. For example, the 3D model apparatus may include apparatus for performing mixing, coating, roll pressing, slitting, notching and drying, laminating, folding and stacking, laminating and stacking, packaging, charging/discharging, degassing, and characteristics inspection. Additionally or alternatively, the 3D model apparatus may be implemented as a 2D model apparatus or implemented together with a 2D model apparatus. In other words, in the present disclosure, the 3D model apparatus is not limited to a 3D model but may include a 2D model. Accordingly, the 3D model apparatus may include terms such as a 2D model apparatus, an animation model apparatus, and a virtual model apparatus.

According to the invention, "user condition information" may include a user input that sets or modifies at least part of conditions and/or values among adjustment parameters or may correspond to the information generated by an arbitrary algorithm predetermined based on the corresponding user input.

According to the invention, "user action information" may include a user input such as a touch input, a drag input, a pinch input, and a rotation input performed on at least part of the 3D model apparatus or may correspond to the information generated by an arbitrary algorithm predetermined based on the corresponding user input.

In the present disclosure, a "defect scenario" may be a scenario that changes the operation of a 3D model apparatus within a malfunction range or includes values or conditions for changing quality information of a material determined by the operation of the 3D model apparatus into a defect range. For example, when a defect scenario occurs during the operation of the simulation apparatus, the operation or quality information of the 3D model apparatus may be changed based on the generated defect scenario. Also, when the operation or quality information of the 3D model apparatus changed by the defect scenario is corrected to lie within a normal range, the corresponding defect scenario may be determined as having been resolved.

In the present disclosure, the "training scenario" may include a scenario for operating secondary battery production apparatus. For example, suppose the secondary battery production apparatus is a slitter; in that case, the training scenario may include a jumbo roll replacement scenario, a pancake takeout scenario, and a fan cable core input scenario. Here, the training scenario may include a defect scenario.

In the present disclosure, the "mixing process" may be a process of producing slurry by mixing active material, a binder, and other additives with a solvent. For example, a user may determine or adjust the addition ratio of active material, conductive material, additives, and a binder to produce slurry of specific quality. Also, in the present disclosure, the "coating process" may be a process of applying the slurry on the foil with a particular amount and shape. For example, a user may determine or adjust an L&S apparatus's die or slurry temperature to perform coating with a quantity and a shape of specific quality.

In the present disclosure, the "roll pressing process" may be a process in which coated electrodes are passed between two rotating upper and lower rolls and pressed to a certain thickness. For example, a user may determine or adjust the spacing between rolls to maximize the cell capacity by increasing the electrode density through the roll pressing process. Also, in the present disclosure, the "slitting process" may be a process of passing electrodes between two upper and lower rotating knives and cutting the electrodes to have a predetermined width. For example, a user may determine or adjust various adjustment parameters to maintain a constant electrode width.

In the present disclosure, the "notching and drying process" may be a process of removing moisture after punching out an electrode into a particular shape. For example, a user may determine or adjust the cutting height or length to punch out the electrode into a shape at specific quality. Also, in the present disclosure, the "lamination process" may be a process of sealing and cutting the electrode and the separator. Also, in the present disclosure, the "L&S process" may be a combination of a lamination process and a stacking process. For example, a user may determine or adjust a value corresponding to the x-axis and a value corresponding to the y-axis to perform cutting at a specific quality.

In the present disclosure, the "package process" may be a process of attaching a lead and a tape to an assembled cell and packaging the assembled cell in an aluminum pouch, and the "degas process" may be a process of removing gas in the cell to prevent air from flowing into the cell and leakage of electrolyte. Also, in the present disclosure, the "characteristics inspection process" may be a process of checking characteristics such as thickness, weight, and insulation voltage of a cell using a measurement device before shipment of the cell. For the processes above, a user may adjust conditions or values of various adjustment parameters or change configuration values corresponding to the apparatus so that each process is performed with specific quality within a normal range.

In the present disclosure, a 'mono-cell' may be produced by sequentially stacking an anode, a separator, a cathode, and a separator, or sequentially stacking a cathode, a separator, an anode, and a separator. That is, the mono-cell may be formed by alternately arranging electrodes (anode and/or cathode) and separators and attaching each layer with each other. Such a mono-cell may be included in an electrode assembly included in a secondary battery.

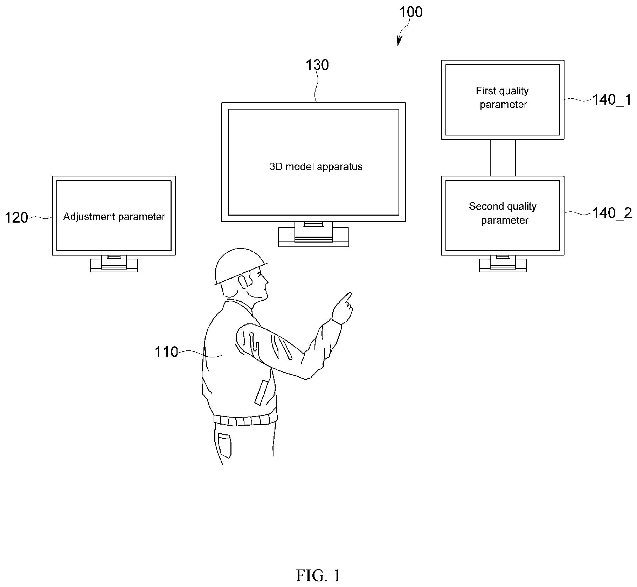

FIG. 1 illustrates an example in which a user 110 uses a simulation apparatus 100 according to an embodiment of the present disclosure. As shown in the figure, the simulation apparatus 100 is used for training a secondary battery production worker (e.g., user 110) and may include a facility operating unit 120, an apparatus operating unit 130, and a quality checking unit 140. For example, the user 110 may learn how to use the secondary battery production apparatus (e.g., an L&S apparatus) or how to respond when the quality of the manufactured product is degraded.

According to an embodiment, the facility operating unit 120 may include a plurality of adjustment parameters for determining the operation of the 3D model apparatus (e.g., a 3D L&S apparatus) displayed on the apparatus operating unit 130; for example, the plurality of adjustment parameters may include a first adjustment parameter (e.g., adjustment parameters of a first set) and/or a second adjustment parameter (e.g., adjustment parameters of a second set). The user 110 may execute, change, and/or correct the operation of the 3D model apparatus by changing at least part of the conditions among the first and second adjustment parameters. In other words, the operation of the 3D model apparatus may be changed or corrected adaptively as the adjustment parameters input by the user 110 are changed.

The apparatus operating unit 130 may include a 3D model apparatus related to the production of secondary batteries. Here, the 3D model apparatus may include virtual models (e.g., a 2D or 3D model) related to secondary battery production apparatus such as, but not limited to, a mixer, a coater, a slitter, a roll presser apparatus, a laminator, and a lamination & stacking (L&S) apparatus and may further include a model of any other apparatus used for the production of secondary batteries. According to an embodiment, the user 110 may manipulate the 3D model apparatus or change the configuration of the 3D model apparatus by applying a touch input, a drag input, or a pinch input to the 3D model apparatus (at least part of the 3D model apparatus) included in the apparatus operating unit 130. In this case, the user 110 may check or enlarge/reduce an arbitrary area of the 3D model apparatus through view switching, operate the 3D model apparatus by performing a touch input, or change the configuration of the 3D model apparatus. Here, it is assumed that the apparatus operating unit 130 displays a 3D model apparatus related to secondary battery production; however, the present disclosure is not limited to the assumption, and thus, an apparatus related to a specific process in the secondary battery production process may be implemented and displayed as a 2D model apparatus.

The quality checking unit 140 may include quality information related to the quality of the material generated by the 3D model apparatus; for example, a first quality checking unit 140_1 may include a first quality parameter (e.g., a first set of quality parameters), and a second quality checking unit 140_2 may include a second quality parameter (e.g., a second set of quality parameters). Here, the quality information may be generated by performing an operation on the first parameter and the second parameter based on a predetermined criterion and/or algorithm. In other words, the user 110 may check the quality information generated in response to changing the adjustment parameter or manipulating the 3D model apparatus through the quality checking unit 140. Additionally or alternatively, the quality checking unit 140 of a specific process according to the secondary battery production process may be included in the apparatus operating unit 130. In this case, the quality information may be displayed in association with the 3D model apparatus of the apparatus operating unit 130 or checked by a specific operation of the 3D model apparatus. For example, when a button for quality checking displayed on the apparatus operating unit 130 is selected, quality information may be displayed or output. In another example, the quality information may be displayed or output by a color change of at least part of an area of the 3D model apparatus.

In FIG. 1, the simulation apparatus 100 is illustrated as including one facility operating unit 120 and two quality checking units 140_1, 140_2; however, the present disclosure is not limited to the specific illustration, and an arbitrary number of facility operating units 120 and quality checking units 140 may be employed depending on the type of 3D model apparatus related to the simulation apparatus 100. Based on the configuration, the user 110 performing secondary battery production may be trained in a method for operating the secondary battery production apparatus (e.g., an L&S apparatus) or a method for responding to a defect situation before being put into work; by training the user 110 as described above, loss due to the occurrence of defects may be considerably reduced, and thus, the efficiency of the secondary battery production task may be improved effectively.

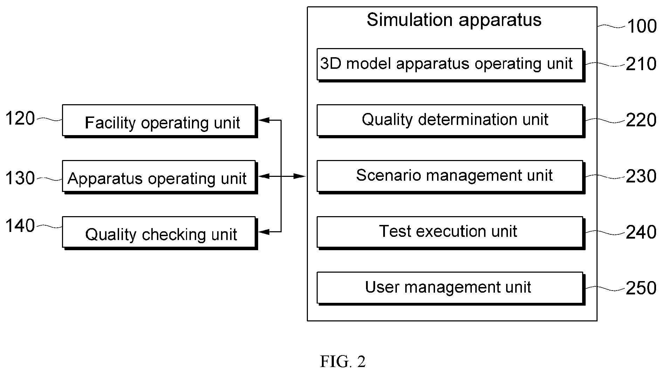

FIG. 2 is a functional diagram illustrating an internal structure of a simulation apparatus 100 according to an embodiment of the present disclosure. As shown in the figure, the simulation apparatus 100 (e.g., at least one processor of the simulation apparatus 100) may include, but not limited to, a 3D model apparatus operating unit 210, a quality determination unit 220, a scenario management unit 230, a test execution unit 240, and a user management unit 250. The simulation apparatus 100 may communicate with the facility operating unit 120, the apparatus operating unit 130, and the quality checking unit 140 and exchange data and/or information related to the 3D model apparatus.

The 3D model apparatus operating unit 210 may execute, change, and/or correct the operation of the 3D model apparatus displayed on the apparatus operating unit 130 according to a user's manipulation. According to an embodiment, the 3D model apparatus operating unit 210 may obtain or receive user action information and/or user condition information using information input from the user (e.g., a secondary battery production worker). Then, the 3D model apparatus operating unit 210 may determine or change the operation of the 3D model apparatus using the obtained or received user action information and/or user condition information.

According to an embodiment, the user action information is generated based on a user input such as touching at least part of an area of the 3D model apparatus included in the apparatus operating unit 130 and may include the information on the amount of change in a setting value of the 3D model apparatus according to the user input. For example, when the 3D model apparatus is an L&S apparatus for secondary battery production, the user may select and release a fixing bolt in the die area of the L&S apparatus through the apparatus operating unit 130 by a touch input and change a shim offset, where, in this case, user action information based on the changed shim offset may be generated. In another example, when the 3D model apparatus is a DSF & EOL apparatus, the user may select a specific area of the DSF & EOL apparatus by a touch input through the apparatus operating unit 130 to replace a consumable of a measurement instrument, where, in this case, user action information based on the replaced consumable may be generated.

According to an embodiment, the user condition information is generated based on a user input that changes conditions and/or values of at least part of parameters among a plurality of adjustment parameters included in the facility operating unit 120 and may include the information on the amount of change in a condition value to determine the operation of the 3D model apparatus according to the user input. For example, when the 3D model apparatus is an L&S apparatus for secondary battery production, the user may change the cutting offset parameter to a specific value through the facility operating unit 120; in this case, user condition information based on the value of a changed cutting offset parameter may be generated.

As described above, when the operation of the 3D model apparatus is executed based on the user condition information and/or the user action information, the quality determination unit 220 may determine or generate quality information related to the quality of a material generated by the operation of the 3D model apparatus. In other words, when the 3D model apparatus operates (when animations or images are played to operate the 3D model apparatus), the quality information may be determined or generated differently according to a setting value or a condition value of the corresponding 3D model apparatus. In other words, the user may change or adjust the quality of a material generated by a 3D model apparatus by changing adjustment parameters or setting at least part of an area of the corresponding 3D model apparatus using a touch input.

According to an embodiment, the quality determination unit 220 may determine or extract one or more quality parameters for determining the quality of a material generated by the 3D model apparatus, and while the operation of the 3D model apparatus is in execution, a value corresponding to each of one or more quality parameters determined based on the operation of the 3D model apparatus under execution may be calculated. Here, a predetermined, arbitrary algorithm may calculate the value corresponding to the quality parameter. Also, the quality determination unit 220 may generate quality information related to the quality of a material generated by the 3D model apparatus based on a value corresponding to each of the one or more quality parameters calculated. For example, when the 3D model apparatus is an L&S apparatus for secondary battery production and a user adjusts a cutting offset parameter, a cutting position may be determined as a quality parameter, and a value corresponding to the cutting position may be calculated. In this case, the quality determination unit 220 may generate or output quality information including a value corresponding to the calculated cutting position.

According to an embodiment, a defect scenario related to a malfunction of the 3D model apparatus may occur during or before the operation of the 3D model apparatus. When a defect scenario occurs as described above, at least part of the setting values, condition values, and quality information of the 3D model apparatus may be changed to lie between an abnormal range based on the defect scenario.

According to an embodiment, the scenario management unit 230 may determine one or more defect scenarios among a plurality of defect scenarios related to a malfunction of the 3D model apparatus and, based on the determined one or more defect scenarios, may change at least one of quality information related to the operation of the 3D model apparatus and quality of the material. For example, when the 3D model apparatus is an L&S apparatus, the plurality of defect scenarios may include a cutting defect scenario, an x-axis mismatch defect scenario, a y-axis mismatch defect scenario, a separator mismatch defect scenario and a path-line deviation defect scenario. In this case, the scenario management unit 230 may determine a defect scenario by extracting at least one from among the cutting defect scenario, the x-axis mismatch defect scenario, the y-axis mismatch defect scenario, the separator mismatch defect scenario and the path-line deviation defect scenario, and change the adjustment parameter, operation, and quality information of the 3D model apparatus according to the extracted or determined defect scenario.

According to an embodiment, when a defect scenario occurs, the user may change the adjustment parameter or the settings of the 3D model apparatus to solve the occurred defect scenario. In this case, the scenario management unit 230 may receive at least one of user action information and user condition information for resolving the determined one or more defect scenarios and correct the operation of the 3D model apparatus changed based on at least one of the received user action information and user condition information. Also, while the operation of the corrected 3D model apparatus is in execution, the scenario management unit 230 may calculate a value corresponding to each of a plurality of quality parameters related to the quality of a material generated by the 3D model apparatus based on the operation of the 3D model apparatus in execution and may correct the quality information related to the quality of a material generated by the corrected 3D model apparatus based on the value corresponding to each of the plurality of calculated quality parameters.

Then, the scenario management unit 230 may determine whether one or more defect scenarios have been resolved using the corrected quality information. For example, when the quality of a material falls within a predetermined normal range, the scenario management unit 230 may determine that the defect scenario has been resolved, but the present disclosure is not limited to the specific operation; when the value of each quality parameter included in the quality information lies within a predetermined normal range or corresponds to a specific value, the scenario management unit 230 may determine that the defect scenario has been resolved. Additionally or alternatively, when a value calculated by providing each quality parameter to an arbitrary algorithm falls within a predetermined normal range, the scenario management unit 230 may determine that the defect scenario has been resolved.

According to an embodiment, a setting value and a condition value of the 3D model apparatus changed to lie within the range of a malfunction by a defect scenario may be determined in advance for each defect scenario, but the present disclosure is not limited to the specific operation. For example, the defect scenario may be generated based on error information generated when actual secondary battery production apparatus malfunctions. In other words, when a malfunction occurs in an external device (e.g., actual secondary battery production apparatus) related to the 3D model apparatus, the scenario management unit 230 may obtain error information related to the malfunction and, based on the obtained error information, may generate a defect scenario related to the malfunction of the 3D model apparatus. For example, when a malfunction occurs in the L&S apparatus, the scenario management unit 230 may obtain a value of each adjustment parameter and a setting value of the L&S apparatus at the time of the malfunction as error information. The scenario manager 230 may generate a defect scenario by changing the obtained value of each adjustment parameter and each obtained setting value of the apparatus to correspond to the 3D model apparatus. Since a defect scenario is generated based on the error information from an actual apparatus using the configuration above, the simulation apparatus 100 may effectively generate training contents optimized for actual work environments.

According to an embodiment, the test execution unit 240 may determine whether one or more defect scenarios have been resolved using the corrected quality information; when it is determined that one or more defect scenarios have been resolved, the test execution unit 240 may calculate a progress time and a loss value of one or more defect scenarios while one or more defect scenarios are in progress. For example, the loss value may include a coating loss value and a material loss value and may be calculated through a predetermined, arbitrary algorithm based on a user's response time, a user input value, and the like. Also, the test execution unit 240 may generate operational capability information of the 3D model apparatus for a user account based on the calculated progress time and loss value. Here, the user account may refer to an account of a worker who uses the simulation apparatus 100, and the operational capability information represents the work skill level of the user, which may include a work speed, degree of proximity to a target value, and an evaluation score. Additionally, when the corresponding user solves all predetermined types of defect scenarios, the test execution unit 240 may determine whether the user passes a simulation training based on the operational capability information for each defect scenario.

The user management unit 250 may perform management such as registration, modification, and deletion of a user account related to a user who uses the simulation apparatus 100. According to an embodiment, the user may use the simulation apparatus 100 using the user's registered user account. In this case, the user management unit 250 may store and manage information on whether each defect scenario has been resolved and operational capability information for dealing with each defect scenario in an arbitrary database for each user account. Using the information stored by the user management unit 250, the scenario management unit 230 may extract information related to a specific user account stored in the database and extract or determine at least one scenario among a plurality of defect scenarios based on the extracted information. For example, the scenario management unit 230 may extract only a defect scenario in which the working speed is lower than an average working speed based on the information related to the user account or provide the extracted defect scenario to the corresponding user, but the present disclosure is not limited to the specific operation; the defect scenario may be extracted or determined by another arbitrary criterion or a combination of arbitrary criteria.

In FIG. 2, it is assumed that functional configurations included in the simulation apparatus 100 are different from each other; however, the assumption is intended only to help understand the disclosure, and one computing device may perform two or more functions. Also, the simulation apparatus 100 of FIG. 2 assumes to be distinguished from the facility operating unit 120, the apparatus operating unit 130, and the quality checking unit 140; however, the present disclosure is not limited to the assumption, and the facility operating unit 120, the apparatus operating unit 130, and the quality checking unit 140 may be included in the simulation apparatus 100. Using the configuration above, the simulation apparatus 100 may generate a defect scenario having various values related to a malfunction of the secondary battery production apparatus and provide the generated defect scenario to the user; accordingly, the user may resolve a malfunction situation that may occur in an actual apparatus without help from others and effectively learn how to respond to each situation.

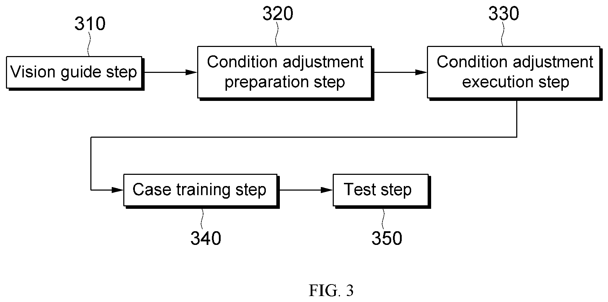

FIG. 3 is a block diagram illustrating an example in which a simulation apparatus operates according to an embodiment of the present disclosure. As shown in the figure, the simulation apparatus (100 of FIG. 1) may be operated through a vision guide step 310, a condition adjustment preparation step 320, a condition adjustment execution step 330, a case training step 340, and a test step 350. In other words, a user may be trained in a method for operating secondary battery production apparatus through the steps 310, 320, 330, 340, 350.

The vision guide step 310 may be a step of learning the types of various adjustment parameters included in the facility operating unit and a method for manipulating adjustment parameters. For example, a work specification (images, videos, and animations indicating the work specification) indicating the types of adjustment parameters and a method for manipulating adjustment parameters may be displayed or output on the facility operating unit, the apparatus operating unit, and the like. Additionally, a portion of the screen may be turned on or activated so that the user may perform a task corresponding to the work specification. In this case, the user may be trained in how to use the facility operating unit by manipulating a condition and/or a value of an arbitrary adjustment parameter corresponding to the work specification. When the user touches a button for a predetermined time according to the work specification or enters a correct value corresponding to an arbitrary parameter, the next step may be performed, or a button that leads to the next step (e.g., NEXT button) may be displayed or activated.

The condition adjustment preparation step 320 may be a step in which a user learns how to set initial values of the facility operating unit, the apparatus operating unit, and the quality checking unit before operating the secondary battery production apparatus. For example, a work specification indicating initial values of the facility operating unit, the apparatus operating unit, and the quality checking unit may be displayed or output on the facility operating unit and the apparatus operating unit. Additionally, a portion of the screen may be turned on or activated so that the user may perform a task corresponding to the work specification. In this case, the user may learn how to set initial values by checking the setting values (e.g., a shim number or a shim model name) of a 3D model apparatus corresponding to the work specification by using a touch input or the like. When the user completes the initial value setting according to the work specification, the next step may be performed, or a button that leads to the next step (e.g., NEXT button) may be displayed or activated.

The condition adjustment execution step 330 may be a step in which a user learns how to check and take action on defects occurring during the operation of the secondary battery production apparatus. For example, in the case of an L&S apparatus, a cutting defect, an x-axis mismatch defect, a y-axis mismatch defect, a mismatch defect and a path-line defect may occur; along with the occurrence of a defect, the type of adjustment parameter required to be manipulated, the value of the adjustment parameter, and a setting value of the 3D model apparatus for dealing with the defect may be displayed or output. A user may process a defect based on the displayed information and learn a defect-solving method.

The case training step 340 may be a step in which a user repeatedly processes or solves each defect scenario or a combination of a plurality of defect scenarios related to a secondary battery production apparatus to master a defect-solving method. For example, the user may directly select one defect scenario among a plurality of defect scenarios and be trained in the selected scenario, but the present disclosure is not limited to the operation; the user may be trained in a defect scenario determined randomly by the simulation apparatus. In this case, the case training step 340 may display or output guide information including condition information and action information required to solve each defect according to the defect scenario. Here, when a user manipulates a specific adjustment parameter or changes a setting value of the 3D model apparatus, the operation of the 3D model apparatus and the quality of a material related to the 3D model apparatus may be changed in real-time. By checking the changed quality, the user may resolve the defect scenario through repeated training and improve the skill in coping with the defect.

The test step 350 may be a step evaluating the operational capability of a user by testing the process through which the user solves a defect scenario. For example, when a user solves each defect scenario, the operational capability of the user may be measured or evaluated based on a progress time and a loss value of the defect scenario. The user may additionally learn or train for an incomplete defect scenario by checking the operational capability and whether the user has passed the test.

Although FIG. 3 assumes that each step is sequentially performed, the present disclosure is not limited to the assumption, and some of the steps may be omitted. Also, the order of performing the steps may be changed. For example, the case training step 340 may be performed again after the testing step 350. Based on the configuration, the user may easily learn how to operate the secondary battery production apparatus through the simulation progressed step by step according to the user's task skill.

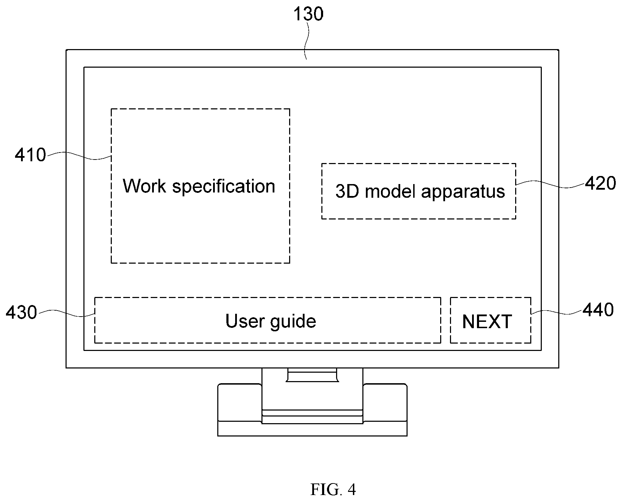

FIG. 4 illustrates an example of a display screen displayed or output on an apparatus operating unit 130 according to an embodiment of the present disclosure. As shown in the figure, the apparatus operating unit 130 may display or output text, an image, and a video including a work specification 410, a 3D model apparatus 420, a user guide 430, and NEXT button 440 on the display screen. FIG. 4 assumes that the work specification 410, the 3D model apparatus 420, the user guide 430, and the NEXT button 440 are displayed in a specific area on the display screen, but the present disclosure is not limited to the assumption; each of the text, image, and video may be displayed in an arbitrary area of the display screen.

As described above, the work specification 410 is a document containing initial setting values and condition values of the 3D model apparatus 420 and may be predetermined or generated by a particular algorithm. For example, the simulation apparatus may receive and provide the contents of the work specification used to operate actual secondary battery production apparatus or generate a new work specification by calculating the initial setting values and condition values of the 3D model apparatus 420 based on a plurality of input work specifications. Here, the 3D model apparatus 420 may be a 3D image or video implementing the secondary battery production apparatus in a 3D form. For example, the 3D model apparatus 420 may operate based on user condition information and/or user action information input from a user.

The user guide 430 may be the information for guiding a user's next action, which includes information necessary to operate the 3D model apparatus 420, condition information and action information required to solve a defect scenario, and so on. In other words, even when the user does not know how to operate the simulation apparatus, the user may be trained in a method for operating the simulation apparatus and a method for dealing with a defect using the user guide 430.

When the condition value or setting value of the 3D model apparatus is determined or the 3D model apparatus 420 is operated using the displayed work specification 410 and user guide 430, the corresponding step (e.g., HMI guide step or condition adjustment preparation step) is resolved, and the NEXT button 440 for proceeding to the next step (e.g., condition adjustment execution step, case training step, or test step) may be activated. The user may select the activated NEXT button 440 through a touch input to perform training corresponding to the next step.

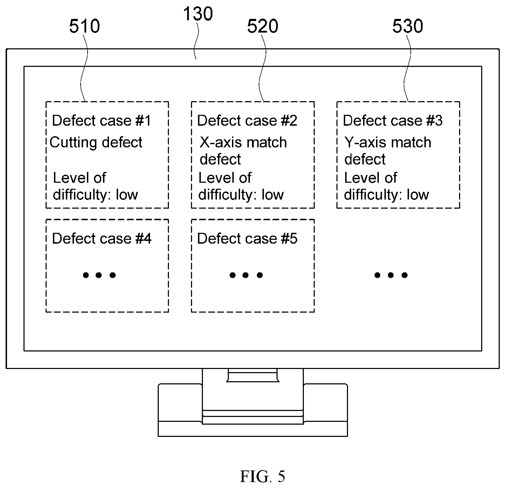

FIG. 5 illustrates an example of a display screen displayed or output on an apparatus operating unit 130 according to another embodiment of the present disclosure. As shown in the figure, the apparatus operating unit 130 may display or output text, an image, or a video including a plurality of defect scenarios 510, 520, 530 on the display screen. FIG. 5 assumes that a first defect scenario 510, a second defect scenario 520, and a third defect scenario 530 are displayed in specific areas on the display screen, but the present disclosure is not limited to the assumption; each text, image, or video may be displayed in any position on the display screen.

According to an embodiment, each defect scenario may include details and the level of difficulty of the defect scenario. For example, the first defect scenario 510 may be a cutting defect with a low level of difficulty, the second defect scenario 520 may be a x-axis mismatch defect with a low level of difficulty, and the third defect scenario 530 may be a y-axis mismatch defect with a low level of difficulty. A user may select at least part of the plurality of defect scenarios 510, 520, 530 displayed on the display screen through a touch input to perform training based on the selected defect scenario.

Additionally or alternatively, one defect scenario among the plurality of defect scenarios 510, 520, 530 may be determined by a predetermined algorithm. For example, through a user account (or information related to the user account) of a user performing training, the simulation apparatus may determine a defect scenario for which the user is not fully skilled or a combination of defect scenarios. Here, the user's work skill level may be calculated or determined as a test result for each defect scenario, but the present disclosure is not limited to the specific scheme. Based on the configuration, the user may easily identify and process a defect scenario for which the user lacks training; thus, the user may be trained only in the defect scenario for which the user has low work skills.

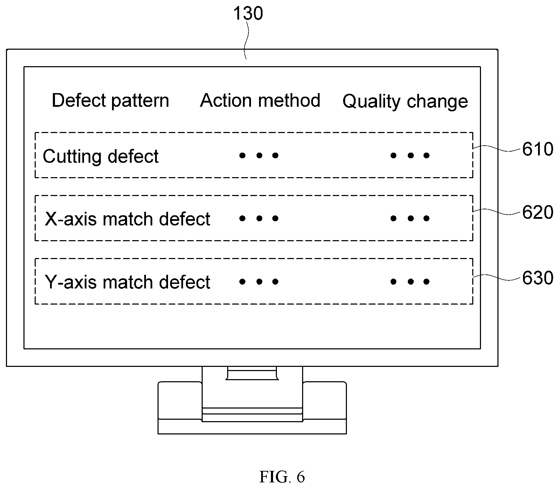

FIG. 6 illustrates an example of a display screen displayed or output on an apparatus operating unit 130 according to yet another embodiment of the present disclosure. As shown in the figure, the apparatus operating unit 130 may display or output text, an image, or a video related to the guide information 610, 620, 630 including condition information and action information required to resolve each defect scenario. FIG. 6 assumes that first guide information 610, second guide information 620, and third guide information 630 are displayed in specific areas on the display screen, but the present disclosure is not limited to the assumption; each text, image, or video may be displayed in any position on the display screen.

According to an embodiment, the guide information 610, 620, 630 may include a defect pattern, a countermeasure, and a quality change level according to a change in a setting value and/or a condition value of the 3D model apparatus. For example, the first guide information 610 may include a countermeasure and a quality change level related to a cutting defect, the second guide information 620 may include a countermeasure and a quality change level related to an x-axis mismatch defect, and the third guide information 630 may include a countermeasure and a quality change level related to a y-axis mismatch defect. The user may perform training to produce a material with quality lying within a normal range by checking a defect pattern and a countermeasure corresponding to each defect pattern and manipulating a condition and/or a value of an adjustment parameter or adjusting setting values of the 3D model apparatus.

FIG. 6 assumes that the guide information 610, 620, 630 is displayed or output on the apparatus operating unit 130, but the present disclosure is not limited to the assumption; the guide information may be displayed on a separate display apparatus.

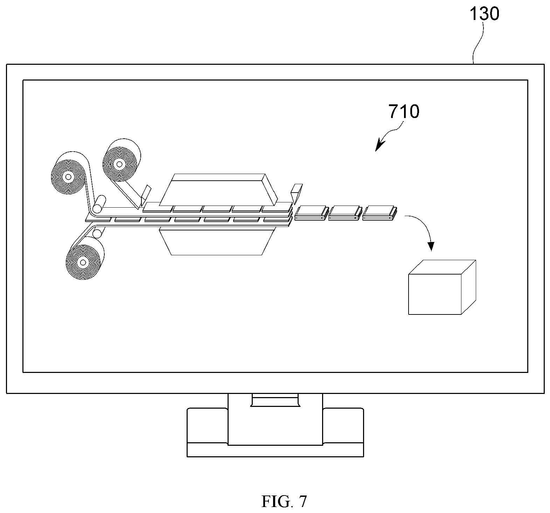

FIG. 7 illustrates an example of a display screen displayed or output on an apparatus operating unit 130 related to a 3D L&S apparatus 710 according to an embodiment of the present disclosure. According to an embodiment, the L&S apparatus may refer to an apparatus for sealing and cutting a notched and dried electrode and separator by thermal bonding or the like. For example, an L&S apparatus may perform a lamination process such as cutting an electrode and/or a separator to increase bonding strength of an electrode assembly, transporting the cut electrode in alignment with the separator, and thermally bonding the aligned electrode and separator, and a stacking process such as stacking the mono-cells produced by the lamination process to produce a stacked cell. As illustrated, the 3D L&S apparatus 710 may include a laminator, and the L&S process may be performed by stacking mono cells generated in an alignment magazine at an end of the laminator; however, the present disclosure is not limited thereto, and the 3D L&S apparatus 710 may include an arbitrarily number of laminators.

In the L&S process performed by such an L&S apparatus, it may be essential to have a constant cutting position and perform lamination and stacking so that matching (e.g., alignment) is made in the x-axis and the y-axis according to a predetermined standard in order to produce a fair quality material (e.g., mono-cell). Here, the cutting position, the x-axis match position, the y-axis match position, and the like may be changed based on setting values and/or condition values of the cutting offset parameter, the x-axis offset parameter, and the y-axis offset parameter (e.g., edge position control (EPC), etc.).

According to an embodiment, the simulation apparatus (100 in FIG. 1) may execute an apparatus operating unit 130 including a 3D L&S apparatus 710 related to the secondary battery production, a facility operating unit including a plurality of adjustment parameters for determining an operation of the 3D L&S apparatus 710, and a quality checking unit including information related to quality of the mono-cell produced by the 3D L&S apparatus 710. Here, the simulation apparatus may obtain at least one of first user action information obtained through the apparatus operating unit 130 and first user condition information obtained through the facility operating unit and, based on the obtained first user action information and the first condition information, may determine the operation of the 3D L&S apparatus 710. In this case, the simulation apparatus may execute an operation of sealing and cutting a plurality of electrodes and separators associated with the 3D L&S apparatus 710 based on the determined operation. In the illustrated example, the 3D L&S apparatus 710 may perform cutting of an upper electrode, a lower electrode and/or a separator which are notched and dried and may bond the cut electrodes and separators to produce a mono-cell.

According to an embodiment, when the operation of the 3D L&S apparatus 710 is executed, quality information related to the quality of the mono-cell produced according to the operation of the 3D L&S apparatus 710 may be generated and output. In this case, the user of the simulation apparatus may check the output quality information associated with the quality of the mono-cell, and if a defect occurs, may modify or correct at least part of the plurality of adjustment parameters to correct the operation and/or quality information of the 3D L&S apparatus 710. For example, the user of the simulation apparatus may modify or correct the set values and/or condition values of the cutting offset parameter, the x-axis offset parameter, the y-axis offset parameter, and the separator offset parameter to determine a cutting position, a x-axis match position, a y-axis match position, a matching position, a moving path of the separator and the like. Additionally or alternatively, the user may modify or correct the operation of the 3D L&S apparatus 710 by manipulating the 3D L&S apparatus 710 with a touch input, a drag input, or the like.

It is illustrated in FIG. 7 that an image, video and/or animation representing part of the 3D L&S apparatus is displayed on the apparatus operating unit 130; however, the present disclosure is not limited thereto, and the apparatus operating unit 130 may include an image, a video, and/or an animation having the same shape as the actual L&S apparatus.

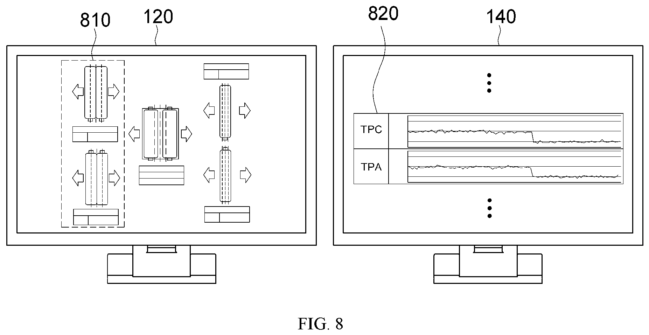

FIG. 8 illustrates an example in which a cutting defect scenario has occurred according to an embodiment of the present disclosure. As described above, the simulation apparatus (100 of FIG. 1) may determine one or more defect scenarios among a plurality of defect scenarios related to a malfunction of the 3D L&S apparatus and, based on the determined one or more defect scenarios, may change at least one of the operation of the 3D lamination and the quality information related to the quality of the mono-cell. Here, the plurality of defect scenarios may include a cutting defect scenario. For example, the cutting defect scenario may refer to a scenario in which a defective material is generated as a cutting position (e.g., a cut surface) of an electrode v-groove is formed at an abnormal position instead of a predetermined normal position.

According to an embodiment, when one or more determined defect scenarios include a cutting defect scenario, the simulation apparatus may change a value of at least one graph 820 of a TPC (Tap Position Cathode) graph and a TPA (Tap Position Anode) graph indicating a cutting position, included in the quality information, to a defect range. Here, the TPC graph and/or the TPAgraph may be a graph representing a distance from a cut surface (cutting position) to a cathode and/or an anode. For example, when a cutting defect scenario occurs, a measured value of at least one graph 820 of a Tap Position Cathode (TPC) graph and a Tap Position Anode (TPA) graph may be changed to a defect range. When the measured value changes to a defect range, a line representing the graph 820 may be displayed as off-center. In this case, the user may check the value of the graph 820 displayed on the quality checking unit 140 and check whether a cutting defect scenario has occurred. Here, the graph 820 may include one or more graphs associated with one or more quality parameters.

Additionally or alternatively, the quality information may include a cutting image indicating a cut surface according to cutting or the like. When the one or more determined defect scenarios include a cutting defect scenario, the simulation apparatus may change at least partial area included in the cutting image to a predetermined area representing cutting defects. That is, the simulation apparatus may change a partial area of the cutting image to a partial area of a cutting image in which the position of the cut surface deviates from a predetermined normal position. In other words, a partial area of the cutting image may be changed to a predetermined area representing defects (e.g., image, video, animation and the like such as a dot, line, or plane representing the defect). In this case, the user may check the cutting image displayed on the quality checking unit 140 and check whether a cutting defect scenario has occurred.

When a cutting defect scenario has occurred, the user may change a cutting offset parameter 810 included in the plurality of adjustment parameters through the facility operating unit 120. For example, the cutting offset parameter 810 may be related to a cutting timing of the 3D L&S apparatus, and may include cutting parameters such as upper cutting, lower cutting, and cell cutting. That is, the user may modify or correct the cutting position by manipulating the cutting offset parameter 810 and correcting the cutting timing of the 3D L&S apparatus.

In this case, the simulation apparatus may correct a value of at least one graph of the TPC graph and the TPA graph, and based on the corrected value of the at least one graph of the TPC graph and the TPA graph, the simulation apparatus may determine whether the cutting defect scenario has been resolved. Additionally or alternatively, the simulation apparatus may correct the cutting image in response to receiving user condition information of changing the value of the cutting offset parameter 810, and based on the corrected cutting image, may determine whether the cutting defect scenario has been resolved.

According to an embodiment, the simulation apparatus may determine that the cutting defect scenario has been resolved when the cutting image and/or the value of the graph 820 which are corrected to correspond to the value of the cutting offset parameter are within a normal range.

It is illustrated in FIG. 8 that the cutting offset parameter 810 is displayed on the facility operating unit 120; however, the present disclosure is not limited thereto, and the facility operating unit 120 may further include any other adjustment parameter associated with the 3D L&S apparatus. In addition, in FIG. 8, although the graph 820 is shown to be displayed on the quality checking unit 140; however, the present disclosure is not limited thereto, and the quality checking unit 140 may further include any other quality information associated with the 3D L&S apparatus. With this configuration, the user may effectively learn in advance how to respond to problems that may occur in the lamination process, and the simulation apparatus may effectively determine whether or not the problem has been solved based on the input or received user's action.

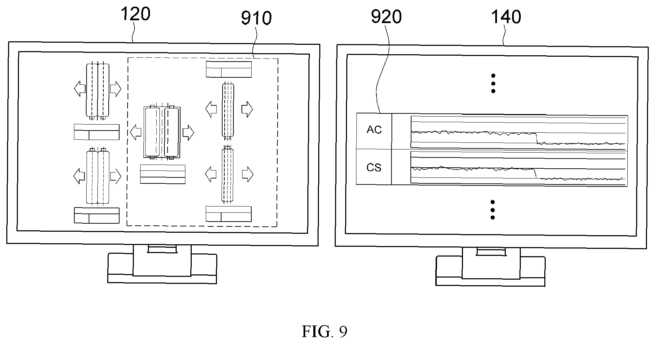

FIG. 9 illustrates an example in which an x-axis mismatch defect scenario has occurred according to an embodiment of the present disclosure. As described above, the simulation apparatus (100 of FIG. 1) may determine one or more defect scenarios among a plurality of defect scenarios related to a malfunction of the 3D L&S apparatus and, based on the determined one or more defect scenarios, may change at least one of the operation of the 3D lamination and the quality information related to the quality of the mono-cell. Here, the plurality of defect scenarios may include an x-axis mismatch defect scenario. For example, the x-axis mismatch defect scenario may refer to a scenario in which an x-axis bias corresponding to a travel direction occurs in the upper electrode, the lower electrode and/or the separator constituting the mono-cell.

According to an embodiment, when one or more determined defect scenarios include an x-axis mismatch defect scenario, the simulation apparatus may change an x-axis match image (not illustrated) and a value of a graph 920 (e.g., the value of each parameter in the graph) included in the quality information displayed on the quality checking unit 140, indicating whether the x-axis matching is made, to a defect range. For example, when an x-axis mismatch defect scenario occurs, measured values of the graph 920 such as AC_1, AC_2, AC_3, AC_4, CS_1, CS_2, CS_3, CS_4, and the like associated with the left/right gap of the upper electrode, the lower electrode, and/or the separator (e.g., the upper separator, the lower separator, etc.) may be changed to the defect range. When the measured value is changed to a defect range, a line representing the graph 920 may be displayed as off-center. Here, graph 920 may include one or more graphs associated with one or more quality parameters.

When the x-axis mismatch defect scenario has occurred, the user may respond to the x-axis mismatch defect scenario by changing or adjusting the condition value of the x-axis offset parameter 910 which may change the left/right gap of the upper electrode, the lower electrode, and/or the separator through the facility operating unit 120. In this case, the simulation apparatus may correct the x-axis match image and the value of the graph 920 indicating whether it is changed and the x-axis matching is made in response to receiving the user condition information of changing each of the upper electrode, the lower electrode and/or the separator. For example, when the x-axis of the upper electrode is biased to the right, the user may change the condition value of the x-axis offset parameter 910 of the upper electrode, and the simulation apparatus may receive the changed condition value to correct the x-axis value of the upper electrode.

Then, the simulation apparatus may determine whether the x-axis mismatch defect scenario has been resolved based on the corrected x-axis match image and the corrected value of the graph 920 indicating whether or not the x-axis matching is made. For example, the simulation apparatus may calculate and correct the value of the graph 920 through an arbitrary algorithm based on the value of the x-axis offset parameter 910 for each of the upper electrode, the lower electrode, and/or the separator. When it is determined that the value of the graph 920 calculated as described above is within a predetermined normal range, the simulation apparatus may determine that the x-axis mismatch defect scenario has been resolved. For example, when the line representing the graph 920 is close to the center, the simulation apparatus may determine that the x-axis mismatch defect scenario has been resolved.

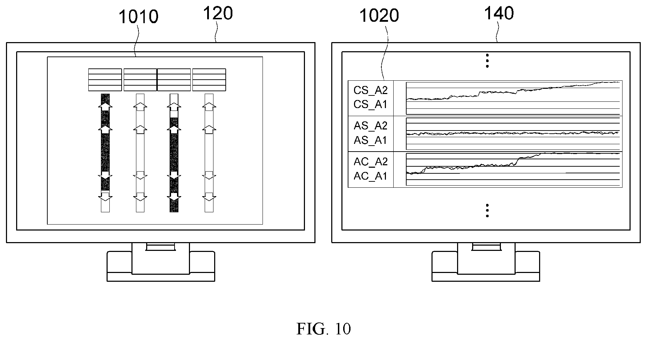

FIG. 10 illustrates an example in which a y-axis mismatch defect scenario has occurred according to an embodiment of the present disclosure. As described above, the simulation apparatus (100 of FIG. 1) may determine one or more defect scenarios among a plurality of defect scenarios related to a malfunction of the 3D L&S apparatus and, based on the determined one or more defect scenarios, may change at least one of the operation of the 3D lamination and the quality information related to the quality of the mono-cell. Here, the plurality of defect scenarios may include a y-axis mismatch defect scenario. For example, the y-axis mismatch defect scenario may refer to a scenario in which a y-axis bias corresponding to a direction (e.g., an operator side or a drive side) perpendicular to a travel direction occurs in the upper electrode, the lower electrode, the upper separator and/or the lower separator constituting the mono-cell.

According to an embodiment, when one or more determined defect scenarios include a y-axis mismatch defect scenario, the simulation apparatus may change a y-axis match image (not illustrated) and a value of a graph 1020 (e.g., the value of each parameter in the graph) indicating whether the y-axis matching is made, included in the quality information displayed on the quality checking unit 140, to a defect range. For example, when a y-axis mismatch defect scenario occurs, measured values of the graph 1020 of AC_A, AC_C, CS_A, CS_C and the like associated with the up/down gap of the upper electrode, the lower electrode, the upper separator and/or the lower separator may be changed to the defect range. For example, the graph 1020 of AC_A, AC_C, CS_A, CS_C and the like may be a graph representing a distance from the upper and/or lower outer periphery of the notched electrode (anode or cathode) to the separator. When the measured value is changed to a defect range, a line representing the graph 1020 may be displayed as off-center. Here, graph 1020 may include one or more graphs associated with one or more quality parameters.

When the y-axis mismatch defect scenario has occurred, the user may respond to the y-axis mismatch defect scenario by changing or adjusting the condition value of the y-axis offset parameter 1010 (e.g., EPC parameter) which may change the up/down gap of the upper electrode, the lower electrode, the upper separator and/or the lower separator through the facility operating unit 120. In this case, the simulation apparatus may correct the y-axis match image and the value of the graph 1020 indicating whether it is changed and the y-axis matching is made in response to receiving the user condition information of changing each of the upper electrode, the lower electrode, the upper separator and/or the lower separator. For example, when the y-axis of the upper electrode is biased upward, the user may change the condition value of the y-axis offset parameter 1010 of the upper electrode, and the simulation apparatus may receive the changed condition value to correct the y-axis value of the upper electrode.

Then, the simulation apparatus may determine whether the y-axis mismatch defect scenario has been resolved based on the corrected y-axis match image and the corrected value of the graph 1020 indicating whether or not the y-axis matching is made. For example, the simulation apparatus may calculate and correct the value of the graph 1020 through an arbitrary algorithm based on the value of the y-axis offset parameter 1010 for each of the upper electrode and the lower electrode. When it is determined that the value of the graph 1020 calculated as described above is within a predetermined normal range, the simulation apparatus may determine that the y-axis mismatch defect scenario has been resolved. For example, when the line representing the graph 1020 is close to the center, the simulation apparatus may determine that the y-axis mismatch defect scenario has been resolved.

In FIGS. 8 to 10, it has been described that there are the cutting defect scenario, the x-axis mismatch defect scenario, the y-axis mismatch defect scenario, and the like, but the plurality of defect scenarios may further include any other defect scenarios that may occur in the L&S apparatus. For example, the plurality of defect scenarios may further include a path-line deviation defect scenario in which the separator deviates from the path line, a mismatch defect scenario in which the upper and lower separators are biased.

According to an embodiment, when the one or more determined defect scenarios include a path-line deviation defect scenario, the simulation apparatus may change a value of a graph indicating whether the path-line deviation occurs, included in the quality information, to a defect range. Here, the graph indicating whether the path-line deviation occurs may be a SGL graph indicating a travel line of the separator. When a path-line deviation defect scenario occurs, the user may respond to the path-line deviation defect scenario by changing or adjusting a condition value of a separator offset parameter which may change a y-axis value of the separator. In this case, the simulation apparatus may correct the value of the graph indicating whether the path-line deviation occurs in response to receiving user condition information for changing the separator offset parameter, and based on the corrected value of the graph indicating whether the path-line deviation occurs, may determine whether the path-line deviation defect scenario has been resolved. For example, the simulation apparatus may calculate and correct the value of the graph through an arbitrary algorithm based on the value of the separator offset parameter. When it is determined that the value of the graph calculated in this way is within a predetermined normal range, the simulation apparatus may determine that the path-line deviation defect scenario has been resolved. For example, when a line representing the graph is close to the center, the simulation apparatus may determine that the path-line deviation defect scenario has been resolved.

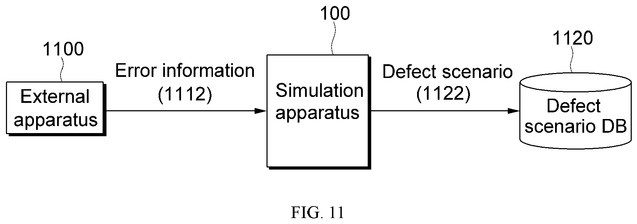

FIG. 11 illustrates an example in which a defect scenario 1122 is generated according to an embodiment of the present disclosure. As shown in the figure, the simulation apparatus 100 may communicate with an external device (e.g., secondary battery production apparatus) 1110 and a defect scenario DB 1120 and exchange data and/or information required for generating the defect scenario 1122.

According to the invention, when a malfunction occurs in an external device 1110, the simulation apparatus 100 may receive or obtain error information 1112 related to the malfunction from the external device 1110. Here, the error information 1112 may include operation information of the external device 1110 when the malfunction occurs and the quality change level of a material generated by the external device 1110. In this case, the simulation apparatus 100 may determine condition values and setting values of a 3D model apparatus (e.g., a 3D L&S apparatus) and/or each quality parameter value of the quality information and generate a defect scenario 1122 having the condition values and the setting values of the determined 3D model apparatus and/or the quality parameter values to respond to the corresponding error information 1112. The generated defect scenario 1122 may be stored and managed in the defect scenario DB 1120. For example, the simulation apparatus 100 may determine condition values and setting values of a 3D model apparatus and/or each quality parameter value of the quality information and generate a defect scenario 1122 to respond to the error information 1112 by using an arbitrary algorithm for generating a defect scenario 1122 and/or a trained machine learning model.

According to the invention, the processor may convert the operation information of the external device 1110 into a first set of parameters related to the operation of the 3D model apparatus and convert the quality change level of a mono-cell generated by the external device 1110 into a second set of parameters related to the quality information related to the quality of a mono-cell generated by the 3D model apparatus. Then, the processor may determine the category of a malfunction occurring in the external device 1110 using the converted first set of parameters and second set of parameters and generate a defect scenario based on the determined category, the first set of parameters, and the second set of parameters.

FIG. 11 assumes that a defect scenario is generated when a malfunction occurs in the external apparatus 1110, but the present disclosure is not limited to the assumption; for example, a defect scenario may be predetermined by an arbitrary user. In another example, a defect scenario may be generated by randomly determining setting values, condition values, and quality information related to the 3D model apparatus within a predetermined, abnormal range. Based on the configuration above, a user may be trained using a defect scenario generated based on a malfunction occurring in actual work environments, thereby effectively improving the ability to respond to defects.

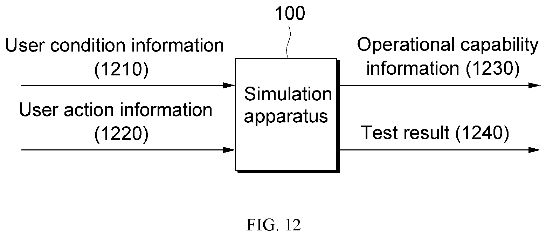

FIG. 12 illustrates an example in which operational capability information 1230 and a test result 1240 are generated according to an embodiment of the present disclosure. As described above, when a defect scenario occurs, the simulation apparatus 100 may receive user condition information 1210 and user action information 1220 from a user and, based on the received user condition information 1210 and user action information 1220, determine whether the defect scenario has been resolved.

According to an embodiment, when it is determined that a defect scenario has been resolved, the simulation apparatus 100 may calculate a progress time and a loss value of the defect scenario while the defect scenario is in progress and, based on the calculated progress time and loss value, generate the operational capability information 1230 for the 3D model apparatus of a user account. In this case, a test result 1240 may be output together with the operational capability information 1230. For example, a user related to the corresponding user account may take a test for an arbitrary defect scenario, and when all defect scenarios related to a specific 3D model apparatus are resolved according to a predetermined criterion, the simulation apparatus 100 may determine that the corresponding user has passed a simulation for the specific 3D model apparatus.

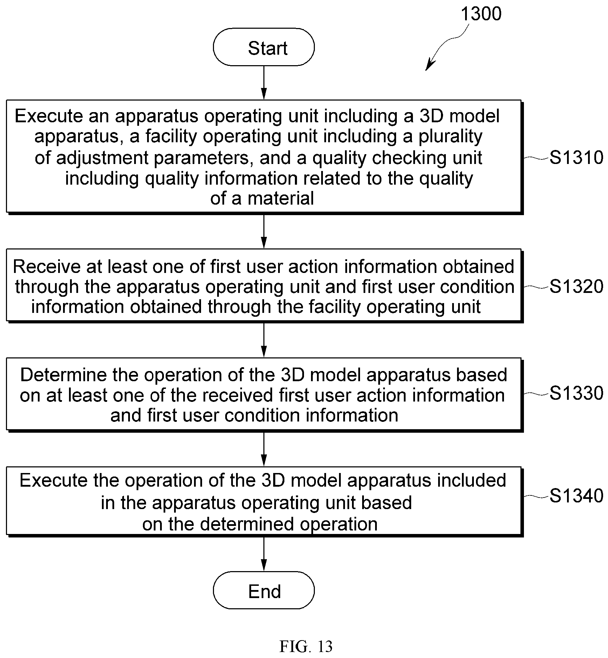

FIG. 13 illustrates an example of a simulation method 1300 for secondary battery production according to an embodiment of the present disclosure. The simulation method 1300 for secondary battery production may be performed by a processor (e.g., at least one processor of a simulation apparatus). As shown in the figure, the simulation method 1300 for secondary battery production may be initiated as the processor executes an apparatus operating unit including a 3D model apparatus related to secondary battery production, a facility operating unit including a plurality of adjustment parameters for determining the operation of the 3D model apparatus, and a quality checking unit including quality information related to the quality of a material generated by the 3D model apparatus S1310.

The processor may obtain at least one of first user action information obtained through the apparatus operating unit and first user condition information obtained through the facility operating unit S1320. Here, the first user condition information may include information related to a value corresponding to at least one adjustment parameter among a plurality of adjustment parameters.

The processor may determine the operation of the 3D model apparatus based on at least one of the first user action information and the first user condition information obtained S1330. Also, the processor may execute the operation of the 3D model apparatus included in the apparatus operating unit based on the determined operation S1340. When receiving the first user action information, the processor may determine whether the received first user action information corresponds to a predetermined operating condition of the 3D model apparatus and approve the operation of the 3D model apparatus when it is determined that the first user action information corresponds to the predetermined operating condition of the 3D model apparatus.

According to an embodiment, the processor may determine one or more quality parameters for determining the quality of a mono-cell generated by the 3D model apparatus and, while the operation of the 3D model apparatus is executed, calculate a value corresponding to each of the determined one or more quality parameters based on the operation of the 3D model apparatus in execution. Also, the processor may generate quality information related to the quality of a mono-cell generated by the 3D model apparatus based on the calculated value corresponding to each of the one or more quality parameters.

According to an embodiment, the processor may determine one or more defect scenarios among a plurality of defect scenarios related to a malfunction of the 3D model apparatus and change at least one of the 3D model apparatus's operation and quality information related to the quality of a material based on the determined one or more defect scenarios. Then, the processor may receive at least one of second user action information and second user condition information for resolving the determined one or more defect scenarios and, based on at least one of the received second user action information and second user condition information, correct the changed operation of the 3D model apparatus. Also, while the corrected operation of the 3D model apparatus is executed, the processor may calculate a value corresponding to each of a plurality of quality parameters related to the quality of a mono-cell generated by the 3D model apparatus based on the operation of the 3D model apparatus in execution. In this case, the processor may correct the quality information related to the quality of a mono-cell generated by the corrected 3D model apparatus based on the calculated value corresponding to each of the plurality of quality parameters and, by using the corrected quality information, determine whether one or more defect scenarios have been resolved.

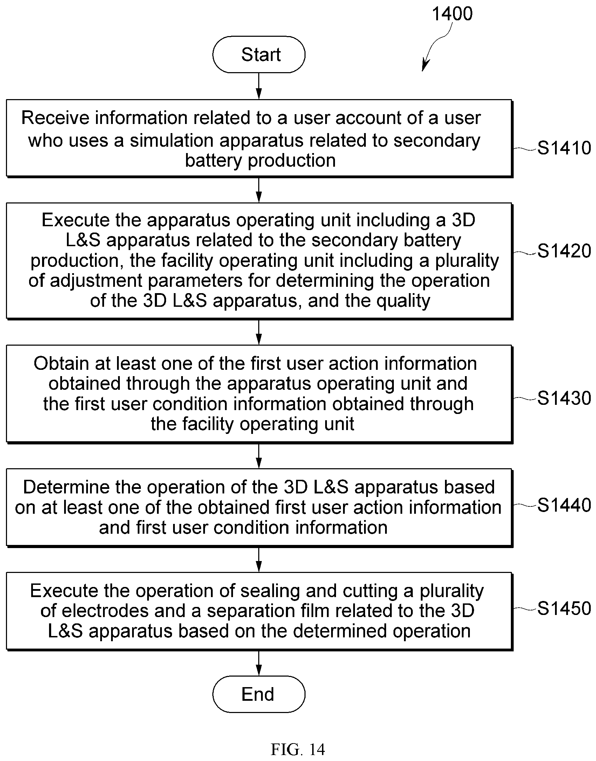

FIG. 14 illustrates an example of an L&S apparatus simulation method 1400 for secondary battery production according to an embodiment of the present disclosure. The L&S apparatus simulation method 1400 for secondary battery production may be performed by a processor (e.g., at least one processor of a simulation apparatus). As shown in the figure, the L&S apparatus simulation method 1400 for secondary battery production may be initiated by receiving information associated with a user account of a user using the simulation apparatus S1410. Here, the information associated with the user account may include information about the ID of the user using the simulation apparatus, information about defect scenarios in which test evaluation was performed, information about defect scenarios in which test evaluation was not performed, and information about whether the test passed or not. However, the present disclosure is not limited thereto.

Upon receiving information associated with a user account, the processor may execute the apparatus operating unit including a 3D L&S apparatus related to secondary battery production, the facility operating unit including a plurality of adjustment parameters for determining the operation of the 3D L&S apparatus, and the quality checking unit including quality information related to the quality of a mono-cell produced by the 3D L&S apparatus S1420. In this case, the processor may obtain at least one of first user action information obtained through the apparatus operating unit and first user condition information obtained through the facility operating unit S1430. Also, the processor may determine the operation of the 3D L&S apparatus based on at least one of the first user action information and the first user condition information obtained S1440. Also, the processor may execute the operation of sealing and cutting the plurality of electrodes and separators related to the 3D L&S apparatus based on the determined operation S1450.

The processor may determine one or more quality parameters for determining the quality of a mono-cell generated by the 3D L&S apparatus and, while the operation of the 3D L&S apparatus is executed, calculate a value corresponding to each of the determined one or more quality parameters based on the operation of the 3D L&S apparatus in execution. Also, the processor may generate quality information related to the quality of a mono-cell generated by the 3D L&S apparatus based on the calculated value corresponding to each of the one or more quality parameters.

According to an embodiment, the processor may receive a test request for the operational capability of the L&S apparatus from the user, and upon receiving the test request, may determine one or more defect scenarios among a plurality of defect scenarios related to a malfunction of the 3D L&S apparatus. For example, a plurality of defect scenarios may include a cutting defect scenario, an x-axis mismatch defect scenario, a y-axis mismatch defect scenario, a mismatch defect scenario, and a path-line deviation defect scenario. In this case, the processor may change at least one of the operation of the 3D L&S apparatus and the quality information related to the quality of the mono-cell based on the determined one or more defect scenarios. Each defect scenario may be resolved by arbitrary user condition information and user action information input from a user.

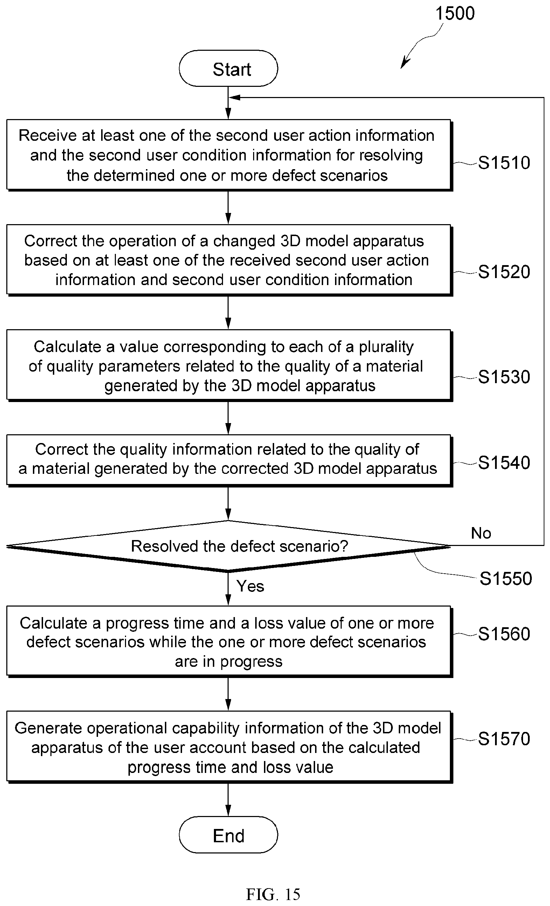

FIG. 15 illustrates an example of a method for calculating a test result 1500 according to an embodiment of the present disclosure. The method for calculating a test result 1500 may be performed by a processor (e.g., at least one processor of a simulation apparatus). As shown in the figure, the method for calculating a test result 1500 may be initiated as the processor receives at least one of second user action information and second user condition information for resolving determined one or more defect scenarios S1510.

As described above, the processor may correct the changed operation of the 3D model apparatus based on at least one of the received second user action information and second user condition information S1520. Also, while the corrected operation of the 3D model apparatus is executed, the processor may calculate a value corresponding to each of a plurality of quality parameters related to the quality of a mono-cell generated by the 3D model apparatus based on the operation of the 3D model apparatus in execution S1530. In this case, the processor may correct the quality information related to the quality of a mono-cell generated by the corrected 3D model apparatus based on the calculated value corresponding to each of the plurality of quality parameters S1540.

Then, the processor may determine whether one or more defect scenarios have been resolved using the corrected quality information and/or the setting values and condition values of the 3D model apparatus S1550. When it is determined that the defect scenario has not been resolved, the processor may again generate or obtain the second user action information and the second user condition information using the information input by the user.

When it is determined that one or more defect scenarios have been resolved, while one or more defect scenarios are in progress, the processor may calculate a progress time and a loss value of one or more defect scenarios S1560. Also, the processor may generate operational capability information for the 3D model apparatus of the user account based on the calculated progress time and loss value S1570. Here, the operational capability information may include, but is not limited to, a progress speed and accuracy calculated using the progress time and the loss value and may further include the user's test score and whether the user has passed the test. In this case, one user account may be assigned to each user performing secondary battery production; the operational capability information generated based on the user's defect scenario progress time and loss value may be stored or managed in conjunction with the user account.

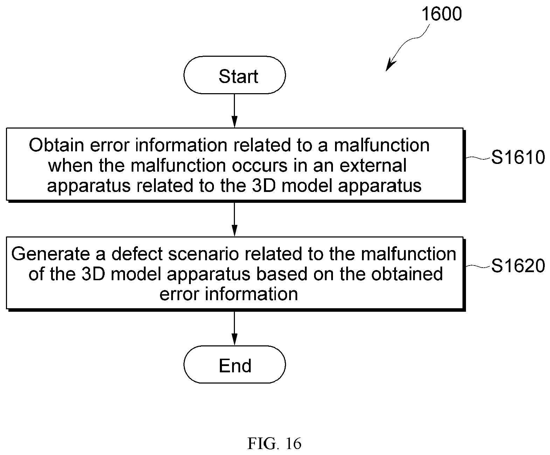

FIG. 16 illustrates an example of a method for generating a defect scenario 1600 according to an embodiment of the present disclosure. The method for generating a defect scenario 1600 may be performed by a processor (e.g., at least one processor of a simulation apparatus). As shown in the figure, the method for generating a defect scenario 1600 may be initiated as the processor obtains error information related to a malfunction when the malfunction occurs in an external apparatus related to the 3D model apparatus S1610.

The processor may generate a defect scenario related to a malfunction of the 3D model apparatus based on the obtained error information S1620. Here, the error information may include each adjustment parameter value and setting values of actual secondary battery production apparatus related to the 3D model apparatus, obtained when the corresponding production equipment malfunctions. For example, when the quality of a mono-cell generated by secondary battery production apparatus gets out of a predetermined normal range, it may be determined that a malfunction has occurred; when it is determined that a malfunction has occurred, the processor may obtain error information related to the malfunction and generate a defect scenario related to the malfunction of the 3D model apparatus based on the obtained error information.

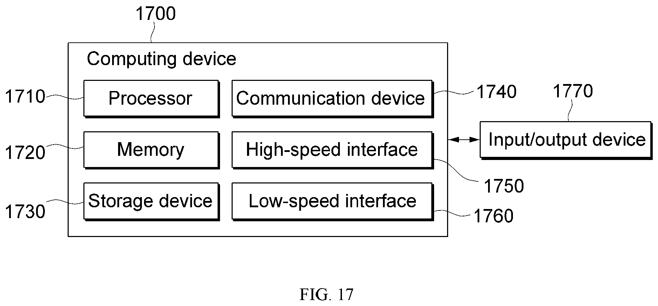

FIG. 17 illustrates an exemplary computing device 1700 for performing the method and/or embodiments. According to an embodiment, the computing device 1700 may be implemented using hardware and/or software configured to interact with a user. Here, the computing device 1700 may include the simulation apparatus (100 of FIG. 1). For example, the computing device 1700 may be configured to support virtual reality (VR), augmented reality (AR), or mixed reality (MR) environments but is not limited thereto. The computing device 1700 may include a laptop computer, a desktop computer, a workstation, a personal digital assistant, a server, a blade server, and a mainframe computer, which is not limited thereto. The constituting elements of the computing device 1700 and connection relationships and functions of the constituting elements are intended to be illustrative and not intended to limit the implementations of the present disclosure described and/or claimed herein.

The computing device 1700 includes a processor 1710, a memory 1720, a storage device 1730, a communication device 1740, a high-speed interface 1750 connected to the memory 1720 and a high-speed expansion port, and a low-speed interface 1760 connected to a low-speed bus and a low-speed storage device. Each of the constituting elements 1710, 1720, 1730, 1740, 1750 may be interconnected using a variety of buses, mounted on the same main board, or mounted and connected in other suitable ways. The processor 1710 may be configured to process instructions of a computer program by performing basic arithmetic, logic, and input/output operations. For example, the processor 1710 may process instructions stored in the memory 1720 and the storage device 1730 and/or instructions executed within the computing device 1700 and display graphic information on an external input/output device 1770 such as a display device combined with the high-speed interface 1750.

The communication device 1740 may provide a configuration or a function for the input/output device 1770 and the computing device 1700 to communicate with each other through a network and provide a configuration or a function to support the input/output device 1770 and/or the computing device 1700 to communicate with another external apparatus. For example, a request or data generated by the processor of the external apparatus according to an arbitrary program code may be transmitted to the computing device 1700 through a network under the control of the communication device 1740. Conversely, a control signal or a command provided under the control of the processor 1710 of the computing device 1700 may be transmitted to another external device through the communication device 1740 and a network.

FIG. 17 assumes that the computing device 1700 includes one processor 1710 and one memory 1720, but the present disclosure is not limited to the assumption; the computing device 1700 may be implemented using a plurality of memories, a plurality of processors, and/or a plurality of buses. Also, although FIG. 17 assumes that one computing device 1700 is employed, the present disclosure is not limited to the assumption, and a plurality of computing devices may interact with each other and perform operations required to execute the method described above.

The memory 1720 may store information in the computing device 1700. According to an embodiment, the memory 1720 may include a volatile memory unit or a plurality of memory units. Additionally or alternatively, the memory 1720 may be composed of a non-volatile memory unit or a plurality of memory units. Also, the memory 1720 may be implemented using a different type of computer-readable medium, such as a magnetic disc or an optical disc. Also, an operating system and at least one program code and/or instruction may be stored in the memory 1720.

The storage device 1730 may be one or more mass storage devices for storing data for the computing device 1700. For example, the storage device 1730 may be configured to include a hard disc; a magnetic disc such as a portable disc; an optical disc; a semiconductor memory device such as an erasable programmable read-only memory (EPROM), an electrically erasable PROM (EEPROM), and a flash memory; and a computer-readable medium including a CD-ROM or DVD-ROM disc; or the storage device 1730 may be configured to include the computer-readable medium. Also, the computer program may be implemented tangibly in the computer-readable medium.

The high-speed interface 1750 and the low-speed interface 1760 may be used for interaction with the input/output device 1770. For example, an input device may include a camera including an audio sensor and/or an image sensor, a keyboard, a microphone, and a mouse; an output device may include a display, a speaker, and a haptic feedback device. In another example, the high-speed interface 1750 and the low-speed interface 1760 may be used for interfacing with a device in which a configuration or function for performing input and output operations is integrated into one entity, such as a touch screen.

According to an embodiment, the high-speed interface 1750 manages bandwidth-intensive operations for the computing device 1700, while the low-speed interface 1760 manages less bandwidth-intensive operations than the high-speed interface 1750, where the above functional assignment has been made merely for an illustrative purpose. According to an embodiment, the high-speed interface 1750 may be coupled to high-speed expansion ports capable of accommodating the memory 1720, the input/output device, and various expansion cards (not shown). Also, the low-speed interface 1760 may be coupled to the storage device 1730 and low-speed expansion ports. Additionally, the low-speed expansion port, which may include various communication ports (e.g., USB, Bluetooth, Ethernet, and wireless Ethernet), may be coupled to one or more input/output devices 1770, such as a keyboard, a pointing device, and a scanner, or a networking device, such as a path-liner or a switch, through a network adaptor.

The computing device 1700 may be implemented in many different forms. For example, the computing device 1700 may be implemented as a standard server or a group of standard servers. Additionally or alternatively, the computing device 1700 may be implemented as part of a rack server system or may be implemented as a personal computer, such as a laptop computer. In this case, constituting elements from the computing device 1700 may be combined with other constituting elements of an arbitrary mobile device (not shown). The computing device 1700 may include one or more other computing devices or may be configured to communicate with one or more computing devices.

FIG. 17 assumes that the input/output device 1770 is not included in the computing device 1700, but the present disclosure is not limited to the assumption; the input/output device 1770 may be configured to be integrated into the computing device 1700 to form a single device. Also, FIG. 17 illustrates that the high-speed interface 1750 and/or the low-speed interface 1760 are illustrated as being configured separately from the processor 1710; however, the present disclosure is not limited thereto, and the high-speed interface 1750 and/or the low-speed interface 1760 may be configured to be included in the processor 1710.

The method and/or various embodiments described above may be implemented in digital electronic circuitry, computer hardware, firmware, software, and/or a combination thereof. Various embodiments of the present disclosure may be executed by a data processing device, for example, one or more programmable processors and/or one or more computing devices; or implemented as a computer-readable medium and/or a computer program stored on a computer-readable medium. The computer program may be written in any form of programming language including a compiled language or an interpreted language and may be distributed in any form such as a stand-alone program, a module, or a subroutine. The computer program may be distributed via a plurality of computing devices connected through one computing device and the same network and/or a plurality of distributed computing devices connected through a plurality of different networks.

The method and/or various embodiments described above may be performed by one or more processors configured to execute one or more computer programs that process, store, and/or manage arbitrary functions by operating based on input data or generating output data. For example, the method and/or various embodiments of the present disclosure may be performed by a special-purpose logic circuit such as a Field Programmable Gate Array (FPGA) or an Application Specific Integrated Circuit (ASIC); an apparatus and/or a system for performing the method and/or various embodiments of the present disclosure may be implemented as a special-purpose logic circuit such as an FPGA or an ASIC.

The one or more processors executing the computer program may include a general-purpose or special-purpose microprocessor and/or one or more processors of an arbitrary type of digital computing device. The processor may receive instructions and/or data from each of the read-only memory and the random-access memory or may receive instructions and/or data from the read-only memory and the random-access memory. In the present disclosure, the constituting elements of a computing device performing the method and/or embodiments may include one or more processors for executing instructions; and one or more memories for storing instructions and/or data.

According to an embodiment, the computing device may send and receive data to and from one or more mass storage devices for storing data. For example, the computing device may receive data from a magnetic or optical disc and transmit data to the magnetic or optical disc. A computer-readable medium suitable for storing instructions and/or data related to a computer program may include any form of non-volatile memory including a semiconductor memory device such as an Erasable Programmable Read-Only Memory (EPROM), an Electrically Erasable PROM (EEPROM), and a flash memory device; however, the present disclosure is not limited thereto. For example, a computer-readable medium may include a magnetic disc such as an internal hard disc or a removable disc, a photomagnetic disk, a CD-ROM disc, and a DVD-ROM disc.

To provide interaction with a user, the computing device may include a display device (e.g., a cathode ray tube (CRT) or a liquid crystal display (LCD)) for providing or displaying information to the user and a pointing device (e.g., a keyboard, a mouse, or a trackball) through which the user may provide input and/or commands to the computing device by the user; however, the present disclosure is not limited to the specific example above. In other words, the computing device may further include any other kind of device for providing interaction with the user. For example, the computing device may provide any form of sensory feedback to the user for interaction with the user, including visual feedback, auditory feedback, and/or tactile feedback. In response to the feedback, the user may provide input to the computing device through various gestures including a visual expression, voice, and motion.

In the present disclosure, various embodiments may be implemented in a computing device that includes a back-end component (e.g., a data server), a middleware component (e.g., an application server), and/or a front-end component. In this case, the constituting elements may be interconnected by any form or any medium of digital data communication, such as a communication network. According to an embodiment, the communication network includes a wired network such as Ethernet, a wired home network (Power Line Communication), a telephone line communication device, and RS-serial communication; a wireless network such as a mobile communication network, a wireless LAN (WLAN), Wi-Fi, and Bluetooth; or a combination of the wired and wireless networks. For example, the communication network may include a local area network (LAN) and a wide area network (WAN).

A computing device based on the illustrative embodiments described herein may be implemented using hardware and/or software configured to interact with a user, including a user device, a user interface (UI) device, a user terminal, or a client device. For example, the computing device may include a portable computing device such as a laptop computer. Additionally or alternatively, the computing device may include a Personal Digital Assistants (PDA), a tablet PC, a game console, a wearable device, an Internet of Things (IoT) device, a virtual reality (VR) device, and an augmented reality (AR) device but is not limited thereto. The computing device may further include other types of devices configured to interact with the user. Also, the computing device may include a portable communication device (e.g., a mobile phone, a smartphone, or a wireless cellular phone) suitable for wireless communication over a network, such as a mobile communication network. The computing device may be configured to communicate wirelessly with a network server using wireless communication technologies and/or protocols such as Radio Frequency (RF), Microwave Frequency (MWF), and/or Infrared Ray Frequency (IRF).

Various embodiments of the present disclosure, including specific structural and functional details, are illustrative in nature. Accordingly, the embodiments of the present disclosure are not limited to those described above and may be implemented in various other forms. Also, the terms used in the present disclosure are intended for describing part of embodiments and should not be construed as limiting the embodiments. For example, singular words and the descriptions above may be construed to include plural forms unless the context dictates otherwise.

Unless defined otherwise, terms used in the present disclosure, including technical or scientific terms, may convey the same meaning understood generally by those skilled in the art to which the present disclosure belongs. Among the terms used in the present disclosure, commonly used terms, such as those defined in ordinary dictionaries, should be interpreted to convey the same meaning in the context of related technology.

The scope of the present invention is defined by the attached claims as interpreted according to Article 69 of the EPC protocol.

## Claims

1. A simulation apparatus (100) for secondary battery production, the simulation apparatus (100) comprising:
i) a memory (1720) configured to store at least one instruction; and
ii) at least one processor configured to execute the at least one instruction stored in the memory (1720) to perform operations comprising:
a) receiving (S1320) information (610, 620, 630, 1112, 1210, 1220, 1230) associated with a user account of a user (110) who uses the simulation apparatus (100) for secondary battery production;
b) when receiving the information (610, 620, 630, 1112, 1210, 1220, 1230) associated with the user account, executing (S1310, S1340) a software module apparatus operating unit (130, 210) including a 3D lamination and stack (L&S) apparatus (420, 710, 1110) related to secondary battery production, a software module facility operating unit (120) including a plurality of adjustment parameters for determining operation of the 3D L&S apparatus, and a software module quality checking unit (140, 140_1, 140_2) including quality information related to quality of a mono-cell produced by the 3D L&S apparatus,
c) obtaining (S1320, S1410) at least one of first user action information obtained through the apparatus operating unit (130, 210), wherein the user action information includes a user input such as a touch input, a drag input, a pinch input, and a rotation input performed on at least part of the 3D L&S apparatus or may correspond to information generated by an arbitrary algorithm predetermined based on the corresponding user input, or first user condition information obtained through the facility operating unit (120), where the user condition information includes a user input that sets or modifies at least part of conditions and/or values among adjustment parameters or corresponds to information generated by an arbitrary algorithm predetermined based on the corresponding user input,
d) determining (S1330) an operation of the 3D L&S apparatus based on at least one of the first user action information or the first user condition information, and
e) executing (S1340, S1450, S1510) an operation of sealing and cutting a plurality of electrodes and separators related to the 3D L&S apparatus based on the determined operation of the 3D L&S apparatus;
wherein the operations further comprise:
f1) receiving a test request for operational capability of the 3D L&S apparatus from the user (110),
f2) when receiving the test request, determining one or more defect scenarios (510, 520, 530) among a plurality of defect scenarios (510, 520, 530) related to a malfunction of the 3D L&S apparatus,
f3) modifying at least one of the operation of the 3D L&S apparatus or the quality information related to the quality of the mono-cell based on the determined one or more defect scenarios (510, 520, 530); and
g1) communicating (S1610) with an external secondary battery production apparatus (1110) and a defect scenario DB (1120); wherein
g2) when a malfunction occurs in the external secondary battery production apparatus (1110), the simulation apparatus (100) is adapted to receive (S1610) error information (1112) related to the malfunction from the external secondary battery production apparatus (1110), wherein the error information (1112) includes operation information of the external secondary battery production apparatus (1110) when the malfunction occurs and a quality change level of a material generated by the external secondary battery production apparatus (1110); and
g3) determining, by the simulation apparatus (100), condition values and setting values of the 3D L&S apparatus and/or each quality parameter value of the quality information and generating (1620) a defect scenario (1122) having the condition values and the setting values of the determined 3D L&S apparatus and/or the quality parameter values to respond to the corresponding error information (1112); and
g4) storing the generated defect scenario (1122) in the defect scenario DB (1120);
g51) wherein the processor converts the operation information of the external secondary battery production apparatus (1110) into a first set of parameters related to the operation of the 3D L&S apparatus and converts the quality change level of a mono-cell generated by the external secondary battery production apparatus (1110) into a second set of parameters related to the quality information related to the quality of a mono-cell generated by the 3D L&S apparatus, and then the processor determines a category of a malfunction occurring in the external secondary battery production apparatus (1110) using the converted first set of parameters and second set of parameters and generates the defect scenario based on the determined category, the first set of parameters, and the second set of parameters; and
g52) wherein the quality parameter values included in the quality information being values of a graph of a Tap Position Cathode, TPC, or a Tap Position Anode, TPA, indicating a cutting position for the case of a cutting defect scenario, or of a graph representing whether an x-axis matching is made for the case of an x-axis mismatch defect scenario, or of a graph representing whether an y-axis matching is made for the case of an y-axis mismatch defect scenario, and/or of a graph representing whether a deviation from a path line occurs for case of a path-line deviation defect scenario.

2. The apparatus (420, 710, 1110) of claim 1, wherein the operations further comprise:
determining one or more quality parameters for determining the quality of the mono-cell produced by the 3D L&S apparatus;
upon executing the operation of the 3D L&S apparatus, calculating (S1510) a value corresponding to each of the one or more quality parameters determined based on the operation of the executed 3D L&S apparatus; and
generating quality information related to the quality of the mono-cell produced by the 3D L&S apparatus based on the calculated value corresponding to each of the one or more quality parameters.

3. The apparatus of claim 1, wherein:
the simulation apparatus (100) is adapted to determine the condition values and setting values of the 3D model apparatus and/or each quality parameter value of the quality information and generate the defect scenario (1122) to respond to the error information (1112) by using an algorithm for generating a defect scenario (1122) and/or a trained machine learning model.

4. The apparatus (420, 710, 1110) of claim 1, wherein the plurality of defect scenarios (510, 520, 530) includes the cutting defect scenario, and
wherein the operations further comprise:
changing a value of at least one graph (820, 920, 1020) of a Tap Position Cathode (TPC) graph (820, 920, 1020) or a Tap Position Anode (TPA) graph (820, 920, 1020) indicating a cutting position, included in the quality information, to a defect range and changing at least a partial area included in a cutting image to a predetermined area indicating a cutting defect, when the determined one or more defect scenarios (510, 520, 530) include the cutting defect scenario.

5. The apparatus (420, 710, 1110) of claim 4, wherein the plurality of adjustment parameters include a cutting offset parameter related to a cutting timing of the 3D L&S apparatus, and
wherein the operations further comprise:
receiving (1510) second user (110) condition information (610, 620, 630, 1112, 1210, 1220, 1230) of changing a value of the cutting offset parameter,
correcting (S1520) the cutting image and the value of the at least one graph (820, 920, 1020) of the TPC graph or the TPA graph in response to the received second user (110) condition information (610, 620, 630, 1112, 1210, 1220, 1230),
determining, based on the corrected cutting image and the corrected value of the at least one graph (820, 920, 1020) of the TPC graph or the TPA graph, whether the cutting defect scenario is resolved, and
upon determining that the cutting defect scenario is resolved, performing a test evaluation of the user account for the cutting defect scenario.

6. The apparatus (420, 710, 1110) of claim 1, wherein the plurality of defect scenarios (510, 520, 530) includes the x-axis mismatch defect scenario, and
wherein the operations further comprise:
changing an x-axis match image and values of a graph (820, 920, 1020) representing whether an x-axis matching is made, included in the quality information, to lie within a defect range when the determined one or more defect scenarios (510, 520, 530) include the x-axis mismatch defect scenario.

7. The apparatus (420, 710, 1110) of claim 6, wherein the plurality of adjustment parameters includes an x-axis offset parameter for changing an x-axis value of at least part of an upper electrode and a lower electrode included in the plurality of electrodes and the separators, and
wherein the operations further comprise:
receiving third user (110) condition information (610, 620, 630, 1112, 1210, 1220, 1230) for changing the x-axis offset parameter,
correcting the x-axis match image and the values of the graph (820, 920, 1020) representing whether x-axis matching is made in response to the received third user (110) condition information (610, 620, 630, 1112, 1210, 1220, 1230),
determining, based on the corrected x-axis matching image and the corrected values of the graph (820, 920, 1020) representing whether x-axis matching is made, whether the x-axis mismatch defect scenario has been resolved, and
upon determining that the x-axis mismatch defect scenario is resolved, performing a test evaluation of the user account for the x-axis mismatch defect scenario.

8. The apparatus (420, 710, 1110) of claim 1, wherein the plurality of defect scenarios (510, 520, 530) includes the y-axis mismatch defect scenario, and
wherein the operations further comprise:
changing a y-axis match image and values of a graph (820, 920, 1020) representing whether y-axis matching is made, included in the quality information, to lie within a defect range when the determined one or more defect scenarios (510, 520, 530) include the y-axis mismatch defect scenario.

9. The apparatus (420, 710, 1110) of claim 8, wherein the plurality of adjustment parameters includes a y-axis offset parameter (1010) for changing a y-axis value of at least part of an upper electrode and a lower electrode included in the plurality of electrodes and an upper separator and a lower separator included in the separators, and
wherein the operations further comprise:
receiving fourth user (110) condition information (610, 620, 630, 1112, 1210, 1220, 1230) for changing the y-axis offset parameter (1010),
correcting the y-axis match image and the values of the graph (820, 920, 1020) representing whether y-axis matching is made in response to the received fourth user (110) condition information (610, 620, 630, 1112, 1210, 1220, 1230),
determining, based on the corrected y-axis matching image and the corrected values of the graph (820, 920, 1020) representing whether y-axis matching is made, whether the y-axis mismatch defect scenario has been resolved, and
upon determining that the y-axis mismatch defect scenario is resolved, performing a test evaluation of the user account for the y-axis mismatch defect scenario.

10. The apparatus (420, 710, 1110) of claim 1, wherein the plurality of defect scenarios (510, 520, 530) include the path-line deviation defect scenario in which the separator deviates from a path line, and
wherein the operations further comprise:
changing values of a graph (820, 920, 1020) representing whether a deviation from the path line occurs, included in the quality information, to lie within a defect range when the determined one or more defect scenarios (510, 520, 530) include the path-line deviation defect scenario.

11. The apparatus (420, 710, 1110) of claim 10, wherein the plurality of adjustment parameters includes a separator offset parameter for changing a y-axis value of the separator, and
wherein the operations further comprise:
receiving fifth user (110) condition information (610, 620, 630, 1112, 1210, 1220, 1230) of changing the separator offset parameter,
correcting values of the graph (820, 920, 1020) representing whether a deviation from the path line occurs in response to the received fifth user (110) condition information (610, 620, 630, 1112, 1210, 1220, 1230),
determining, based on the corrected value of the graph (820, 920, 1020) representing whether a deviation from the path line occurs, whether the path-line deviation defect scenario is resolved, and
upon determining that the path-line deviation defect scenario is resolved, performing a test evaluation of the user account for the path-line deviation defect scenario.

12. The apparatus (420, 710, 1110) of claim 1, wherein the operations further comprise:
determining whether the plurality of defect scenarios (510, 520, 530) associated with the malfunction of the 3D L&S apparatus are resolved by the user account, and
upon determining that the plurality of defect scenarios (510, 520, 530) are resolved by the user account, determining whether the user (110) passes the test based on operational capability information (610, 620, 630, 1112, 1210, 1220, 1230) of the user account generated corresponding to each of the defect scenarios (510, 520, 530) included in the plurality of defect scenarios (510, 520, 530).

13. A laminator simulation method for secondary battery production, the method (1300, 1400) being performed by at least one processor, the method (1300, 1400) comprising:
a) receiving (S1320) information (610, 620, 630, 1112, 1210, 1220, 1230) associated with a user account of a user (110) who uses a simulation apparatus (100) for secondary battery production;
b) when receiving the information (610, 620, 630, 1112, 1210, 1220, 1230) associated with the user account, executing (S1310, S1340) a software module apparatus operating unit (130, 210) including a 3D lamination and stack (L&S) apparatus (420, 710, 1110) related to secondary battery production, a software module facility operating unit (120) including a plurality of adjustment parameters for determining operation of the 3D L&S apparatus, and a software module quality checking unit (140, 140_1, 140_2) including quality information related to quality of a mono-cell produced by the 3D L&S apparatus,
c) obtaining (S1320, S1410) at least one of first user action information obtained through the apparatus operating unit (130, 210), wherein the user action information includes a user input such as a touch input, a drag input, a pinch input, and a rotation input performed on at least part of the 3D L&S apparatus or may correspond to information generated by an arbitrary algorithm predetermined based on the corresponding user input, or first user condition information obtained through the facility operating unit (120), where the user condition information includes a user input that sets or modifies at least part of conditions and/or values among adjustment parameters or corresponds to information generated by an arbitrary algorithm predetermined based on the corresponding user input,
d) determining (S1330) an operation of the 3D L&S apparatus based on at least one of the first user action information or the first user condition information, and
e) executing (S1340, S1450, S1510) an operation of sealing and cutting a plurality of electrodes and separators related to the 3D L&S apparatus based on the determined operation of the 3D L&S apparatus;
f1) receiving a test request for operational capability of the 3D L&S apparatus from the user (110),
f2) when receiving the test request, determining one or more defect scenarios (510, 520, 530) among a plurality of defect scenarios (510, 520, 530) related to a malfunction of the 3D L&S apparatus,
f3) modifying at least one of the operation of the 3D L&S apparatus or the quality information related to the quality of the mono-cell based on the determined one or more defect scenarios (510, 520, 530); and
g1) communicating with an external secondary battery production apparatus (1110) and a defect scenario DB (1120); wherein
g2) when a malfunction occurs in the external secondary battery production apparatus (1110), receiving (S1610) , by the simulation apparatus (100) error information (1112) related to the malfunction from the external secondary battery production apparatus (1110), wherein the error information (1112) includes operation information of the external secondary battery production apparatus (1110) when the malfunction occurs and a quality change level of a material generated by the external secondary battery production apparatus (1110); and
g3) determining, by the simulation apparatus (100), condition values and setting values of the 3D L&S apparatus and/or each quality parameter value of the quality information and generating (1620) a defect scenario (1122) having the condition values and the setting values of the determined 3D L&S apparatus and/or the quality parameter values to respond to the corresponding error information (1112); and
g4) storing the generated defect scenario (1122) in the defect scenario DB (1120);
g51) wherein the processor converts the operation information of the external secondary battery production apparatus (1110) into a first set of parameters related to the operation of the 3D L&S apparatus and converts the quality change level of a mono-cell generated by the external secondary battery production apparatus (1110) into a second set of parameters related to the quality information related to the quality of a mono-cell generated by the 3D L&S apparatus, and then the processor determines a category of a malfunction occurring in the external secondary battery production apparatus (1110) using the converted first set of parameters and second set of parameters and generates the defect scenario based on the determined category, the first set of parameters, and the second set of parameters; and
g52) wherein the quality parameter values included in the quality information being values of a graph of a Tap Position Cathode, TPC, or a Tap Position Anode, TPA, indicating a cutting position for the case of a cutting defect scenario, or of a graph representing whether an x-axis matching is made for the case of an x-axis mismatch defect scenario, or of a graph representing whether an y-axis matching is made for the case of an y-axis mismatch defect scenario, and/or of a graph representing whether a deviation from a path line occurs for case of a path-line deviation defect scenario.

14. The method (1300, 1400) of claim 13, further comprising:
determining one or more quality parameters for determining the quality of the mono-cell produced by the 3D L&S apparatus;
upon executing the operation of the 3D L&S apparatus, calculating (S1510) a value corresponding to each of the one or more quality parameters determined based on the operation of the executed 3D L&S apparatus; and
generating quality information related to the quality of the mono-cell produced by the 3D L&S apparatus based on the calculated value corresponding to each of the one or more quality parameters.

15. The method (1300, 1400) of claim 13, further comprising:
determining the condition values and setting values of the 3D model apparatus and/or each quality parameter value of the quality information and generating the defect scenario (1122) to respond to the error information (1112) by using an algorithm for generating a defect scenario (1122) and/or a trained machine learning model

16. The method (1300, 1400) of claim 13, further comprising:
determining (S1550) whether the plurality of defect scenarios (510, 520, 530) associated with a malfunction of the 3D L&S apparatus are resolved by the user account, and
upon determining (S1550) that the plurality of defect scenarios (510, 520, 530) are resolved by the user account, determining whether the user (110) passes the test based on operational capability information (610, 620, 630, 1112, 1210, 1220, 1230) of the user account generated corresponding to each of the defect scenarios (510, 520, 530) included in the plurality of defect scenarios (510, 520, 530).

17. A non-transitory computer-readable medium storing instructions for executing a laminator simulation method for secondary battery production, the instructions, when executed by one or more processors of the simulation apparatus according to claims 1-12, causing the one or more processors to perform a method (1300, 1400) according to any one or more of claims 13-16.

## Patentansprüche

1. Simulationsvorrichtung (100) zur Herstellung von Sekundärbatterien, wobei die Simulationsvorrichtung (100) umfasst:
i) einen Speicher (1720), der dazu eingerichtet ist, zumindest eine Anweisung zu speichern; und
ii) zumindest einen Prozessor, der dazu eingerichtet ist, die zumindest eine in dem Speicher (1720) gespeicherte Anweisung auszuführen, um Vorgänge durchzuführen, welche umfassen:
a) Empfangen (S1320) von Informationen (610, 620, 630, 1112, 1210, 1220, 1230), die einem Benutzerkonto eines Benutzers (110) zugeordnet sind, der die Simulationsvorrichtung (100) zur Herstellung von Sekundärbatterien verwendet;
b) wenn die dem Benutzerkonto zugeordneten Informationen (610, 620, 630, 1112, 1210, 1220, 1230) empfangen werden, Ausführen (S1310, S1340) einer Softwaremodul-Vorrichtungsbedieneinheit (130, 210), die eine 3D-Laminier- und Stapelvorrichtung (L&S) (420, 710, 1110) in Bezug auf die Herstellung von Sekundärbatterien umfasst, einer Softwaremodul-Anlagenbedieneinheit (120), die eine Vielzahl von Einstellparametern zum Bestimmen des Betriebs der 3D-L&S-Vorrichtung umfasst, und einer Softwaremodul-Qualitätsprüfeinheit (140, 140_1, 140_2), die Qualitätsinformationen bezüglich der Qualität einer von der 3D-L&S-Vorrichtung hergestellten Monozelle umfasst;
c) Erlangen (S1320, S1410) zumindest einer Information aus ersten Benutzeraktionsinformationen, die über die Vorrichtungsbedieneinheit (130, 210) erlangt werden, wobei die Benutzeraktionsinformationen eine Benutzereingabe umfassen, wie etwa eine Berührungseingabe, eine Zieheingabe, eine Pinch-Eingabe und eine Rotationseingabe, die an zumindest einem Teil der 3D-L&S-Vorrichtung vorgenommen wird, oder Informationen entsprechen können, die durch einen beliebigen Algorithmus erzeugt werden, der auf Grundlage der entsprechenden Benutzereingabe vorbestimmt ist, oder ersten Benutzerbedingungsinformationen entsprechen können, die über die Anlagenbedieneinheit (120) erlangt werden, wobei die Benutzerbedingungsinformationen eine Benutzereingabe umfassen, die zumindest einen Teil von Bedingungen und/oder Werten unter den Einstellparametern festlegt oder modifiziert, oder Informationen entsprechen, die durch einen beliebigen Algorithmus erzeugt werden, der auf Grundlage der entsprechenden Benutzereingabe vorbestimmt ist;
d) Bestimmen (S1330) eines Betriebs der 3D-L&S-Vorrichtung auf Grundlage zumindest einer der ersten Benutzeraktionsinformationen oder der ersten Benutzerbedingungsinformationen; und
e) Ausführen (S1340, S1450, S1510) eines Vorgangs zum Versiegeln und Schneiden einer Vielzahl von Elektroden und Separatoren, die mit der 3D-L&S-Vorrichtung in Zusammenhang stehen, auf Grundlage des bestimmten Betriebs der 3D-L&S-Vorrichtung;
wobei die Vorgänge ferner umfassen:
f1) Empfangen einer Testanforderung hinsichtlich der Betriebsfähigkeit der 3D-L&S-Vorrichtung von dem Benutzer (110),
f2) bei Empfangen der Testanforderung, Bestimmen eines oder mehrerer Defektszenarien (510, 520, 530) aus einer Vielzahl von Defektszenarien (510, 520, 530), die mit einer Fehlfunktion der 3D-L&S-Vorrichtung in Zusammenhang stehen,
f3) Modifizieren, auf Grundlage eines oder mehrerer der bestimmten Defektszenarien (510, 520, 530), des Betriebs der 3D-L&S-Vorrichtung und/oder der Qualitätsinformationen bezüglich der Qualität der Monozelle; und
g1) Kommunizieren (S1610) mit einer externen Vorrichtung zur Herstellung von Sekundärbatterien (1110) und einer Defektszenario-DB (1120); wobei
g2) bei Auftreten einer Fehlfunktion in der externen Vorrichtung zur Herstellung von Sekundärbatterien (1110) die Simulationsvorrichtung (100) dazu ausgebildet ist, Fehlerinformationen (1112) bezüglich der Fehlfunktion von der externen Vorrichtung zur Herstellung von Sekundärbatterien (1110) zu empfangen (S1610), wobei die Fehlerinformationen (1112) Betriebsinformationen der externen Vorrichtung zur Herstellung von Sekundärbatterien (1110) beim Auftreten der Fehlfunktion und einen Qualitätsänderungsgrad eines von der externen Vorrichtung zur Herstellung von Sekundärbatterien (1110) erzeugten Materials umfassen; und
g3) Bestimmen der Bedingungswerte und Einstellwerte der 3D-L&S-Vorrichtung und/oder jedes Qualitätsparameterwerts der Qualitätsinformationen durch die Simulationsvorrichtung (100) und Erzeugen (1620) eines Defektszenarios (1122), das die Bedingungswerte und die Einstellwerte der bestimmten 3D-L&S-Vorrichtung und/oder die Qualitätsparameterwerte aufweist, um auf die entsprechenden Fehlerinformationen (1112) zu reagieren; und
g4) Speichern des erzeugten Defektszenarios (1122) in der Defektszenario-DB (1120);
g51) wobei der Prozessor die Betriebsinformationen der externen Vorrichtung zur Herstellung von Sekundärbatterien (1110) in einen ersten Parametersatz umwandelt, der sich auf den Betrieb der 3D-L&S-Vorrichtung bezieht, und den Qualitätsänderungsgrad einer von der externen Vorrichtung zur Herstellung von Sekundärbatterien (1110) erzeugten Monozelle in einen zweiten Parametersatz umwandelt, der sich auf die Qualitätsinformationen bezüglich der Qualität einer von der 3D-L&S-Vorrichtung erzeugten Monozelle bezieht, und der Prozessor anschließend unter Verwendung des umgewandelten ersten Parametersatzes und des umgewandelten zweiten Parametersatzes eine Kategorie einer in der externen Vorrichtung zur Herstellung von Sekundärbatterien (1110) auftretenden Fehlfunktion bestimmt und das Defektszenario auf Grundlage der bestimmten Kategorie, des ersten Parametersatzes und des zweiten Parametersatzes erzeugt; und
g52) wobei die in den Qualitätsinformationen enthaltenen Qualitätsparameterwerte Werte eines Graphen der Tap-Position der Kathode (TPC) oder der Tap-Position der Anode (TPA) sind, der für den Fall eines Schneiddefektszenarios eine Schneidposition anzeigt, oder Werte eines Graphen sind, der darstellt, ob für den Fall eines x-Achsen-Nichtübereinstimmungs-Defektszenarios eine x-Achsen-Übereinstimmung vorgenommen wird, oder Werte eines Graphen sind, der darstellt, ob für den Fall eines y-Achsen-Nichtübereinstimmungs-Defektszenarios eine y-Achsen-Übereinstimmung vorgenommen wird, und/oder Werte eines Graphen sind, der darstellt, ob für den Fall eines Pfadlinienabweichungs-Defektszenarios eine Abweichung von einer Pfadlinie auftritt.

2. Vorrichtung (420, 710, 1110) nach Anspruch 1, wobei die Vorgänge ferner umfassen:
Bestimmen eines oder mehrerer Qualitätsparameter zum Bestimmen der Qualität der von der 3D-L&S-Vorrichtung hergestellten Monozelle;
bei Ausführen des Betriebs der 3D-L&S-Vorrichtung, Berechnen (S1510) eines Werts, der jedem einzelnen der einen oder mehreren Qualitätsparameter entspricht, die auf Grundlage des Betriebs der ausgeführten 3D-L&S-Vorrichtung bestimmt wurden; und
Erzeugen von Qualitätsinformationen bezüglich der Qualität der von der 3D-L&S-Vorrichtung hergestellten Monozelle auf Grundlage des berechneten Werts, der jedem einzelnen der einen oder mehreren Qualitätsparameter entspricht.

3. Vorrichtung nach Anspruch 1, wobei:
die Simulationsvorrichtung (100) dazu ausgebildet ist, die Bedingungswerte und Einstellwerte der 3D-Modellvorrichtung und/oder jeden Qualitätsparameterwert der Qualitätsinformationen zu bestimmen und das Defektszenario (1122) als Reaktion auf die Fehlerinformationen (1112) unter Verwendung eines Algorithmus zum Erzeugen eines Defektszenarios (1122) und/oder eines trainierten Modells für maschinelles Lernen zu erzeugen.

4. Vorrichtung (420, 710, 1110) nach Anspruch 1, wobei die Vielzahl von Defektszenarien (510, 520, 530) das Schneiddefektszenario umfasst, und
wobei die Vorgänge ferner umfassen:
Ändern eines Werts zumindest eines Graphen (820, 920, 1020) von einem Graphen der Tap-Position der Kathode (TPC) (820, 920, 1020) oder einem Graphen der Tap-Position der Anode (TPA) (820, 920, 1020), der eine Schneidposition angibt und in den Qualitätsinformationen enthalten ist, in einen Defektbereich, und Ändern zumindest eines in einem Schneidbild enthaltenen Teilbereichs in einen vorbestimmten Bereich, der einen Schneiddefekt anzeigt, wenn eines oder mehrere der bestimmten Defektszenarien (510, 520, 530) das Schneiddefektszenario umfassen.

5. Vorrichtung (420, 710, 1110) nach Anspruch 4, wobei die Vielzahl von Einstellparametern einen Schneidversatzparameter umfasst, der sich auf einen Schneidzeitpunkt der 3D-L&S-Vorrichtung bezieht, und
wobei die Vorgänge ferner umfassen:
Empfangen (1510) von zweiten Benutzerbedingungsinformationen (610, 620, 630, 1112, 1210, 1220, 1230) des Benutzers (110) zum Ändern eines Werts des Schneidversatzparameters,
Korrigieren (S1520) des Schneidbilds und des Werts des zumindest einen Graphen (820, 920, 1020) des TPC-Graphen oder des TPA-Graphen als Reaktion auf die empfangenen zweiten Benutzerbedingungsinformationen (610, 620, 630, 1112, 1210, 1220, 1230) des Benutzers (110),
Bestimmen, auf Grundlage des korrigierten Schneidbilds und des korrigierten Werts des zumindest einen Graphen (820, 920, 1020) des TPC-Graphen oder des TPA-Graphen, ob das Schneiddefektszenario behoben ist; und
nach dem Bestimmen, dass das Schneiddefektszenario behoben ist, Durchführen einer Testbewertung des Benutzerkontos für das Schneiddefektszenario.

6. Vorrichtung (420, 710, 1110) nach Anspruch 1, wobei die Vielzahl von Defektszenarien (510, 520, 530) das x-Achsen-Nichtübereinstimmungs-Defektszenario umfasst, und
wobei die Vorgänge ferner umfassen:
Ändern eines x-Achsen-Übereinstimmungsbilds und von Werten eines Graphen (820, 920, 1020), der darstellt, ob eine x-Achsen-Übereinstimmung vorgenommen wird und in den Qualitätsinformationen enthalten ist, derart, dass das Bild und die Werte innerhalb eines Defektbereichs liegen, wenn eines oder mehrere der bestimmten Defektszenarien (510, 520, 530) das x-Achsen-Nichtübereinstimmungs-Defektszenario umfassen.

7. Vorrichtung (420, 710, 1110) nach Anspruch 6, wobei die Vielzahl von Einstellparametern einen x-Achsen-Versatzparameter zum Ändern eines x-Achsenwerts zumindest eines Teils einer oberen Elektrode und einer unteren Elektrode, die in der Vielzahl von Elektroden und den Separatoren enthalten sind, umfasst, und
wobei die Vorgänge ferner umfassen:
Empfangen von dritten Benutzerbedingungsinformationen (610, 620, 630, 1112, 1210, 1220, 1230) des Benutzers (110) zum Ändern des x-Achsen-Versatzparameters,
Korrigieren des x-Achsen-Übereinstimmungsbilds und der Werte des Graphen (820, 920, 1020), der darstellt, ob eine x-Achsen-Übereinstimmung vorgenommen wird, als Reaktion auf die empfangenen dritten Benutzerbedingungsinformationen (610, 620, 630, 1112, 1210, 1220, 1230) des Benutzers (110),
Bestimmen, auf Grundlage des korrigierten x-Achsen-Übereinstimmungsbilds und der korrigierten Werte des Graphen (820, 920, 1020), der darstellt, ob eine x-Achsen-Übereinstimmung vorgenommen wird, ob das x-Achsen-Nichtübereinstimmungs-Defektszenario behoben worden ist; und
nach dem Bestimmen, dass das x-Achsen-Nichtübereinstimmungs-Defektszenario behoben ist, Durchführen einer Testbewertung des Benutzerkontos für das x-Achsen-Nichtübereinstimmungs-Defektszenario.

8. Vorrichtung (420, 710, 1110) nach Anspruch 1, wobei die Vielzahl von Defektszenarien (510, 520, 530) das y-Achsen-Nichtübereinstimmungs-Defektszenario umfasst, und
wobei die Vorgänge ferner umfassen:
Ändern eines y-Achsen-Übereinstimmungsbilds und von Werten eines Graphen (820, 920, 1020), der darstellt, ob eine y-Achsen-Übereinstimmung vorgenommen wird und in den Qualitätsinformationen enthalten ist, derart, dass das Bild und die Werte innerhalb eines Defektbereichs liegen, wenn eines oder mehrere der bestimmten Defektszenarien (510, 520, 530) das y-Achsen-Nichtübereinstimmungs-Defektszenario umfassen.

9. Vorrichtung (420, 710, 1110) nach Anspruch 8, wobei die Vielzahl von Einstellparametern einen y-Achsen-Versatzparameter (1010) zum Ändern eines y-Achsenwerts zumindest eines Teils einer oberen Elektrode und einer unteren Elektrode, die in der Vielzahl von Elektroden enthalten sind, und eines oberen Separators und eines unteren Separators, die in den Separatoren enthalten sind, umfasst, und
wobei die Vorgänge ferner umfassen:
Empfangen von vierten Benutzerbedingungsinformationen (610, 620, 630, 1112, 1210, 1220, 1230) des Benutzers (110) zum Ändern des y-Achsen-Versatzparameters (1010),
Korrigieren des y-Achsen-Übereinstimmungsbilds und der Werte des Graphen (820, 920, 1020), der darstellt, ob eine y-Achsen-Übereinstimmung vorgenommen wird, als Reaktion auf die empfangenen vierten Benutzerbedingungsinformationen (610, 620, 630, 1112, 1210, 1220, 1230) des Benutzers (110),
Bestimmen, auf Grundlage des korrigierten y-Achsen-Übereinstimmungsbilds und der korrigierten Werte des Graphen (820, 920, 1020), der darstellt, ob eine y-Achsen-Übereinstimmung vorgenommen wird, ob das y-Achsen-Nichtübereinstimmungs-Defektszenario behoben worden ist; und
nach dem Bestimmen, dass das y-Achsen-Nichtübereinstimmungs-Defektszenario behoben ist, Durchführen einer Testbewertung des Benutzerkontos für das y-Achsen-Nichtübereinstimmungs-Defektszenario.

10. Vorrichtung (420, 710, 1110) nach Anspruch 1, wobei die Vielzahl von Defektszenarien (510, 520, 530) das Pfadlinienabweichungs-Defektszenario umfasst, bei dem der Separator von einer Pfadlinie abweicht, und
wobei die Vorgänge ferner umfassen:
Ändern von Werten eines Graphen (820, 920, 1020), der darstellt, ob eine Abweichung von der Pfadlinie auftritt und in den Qualitätsinformationen enthalten ist, derart, dass die Werte innerhalb eines Defektbereichs liegen, wenn eines oder mehrere der bestimmten Defektszenarien (510, 520, 530) das Pfadlinienabweichungs-Defektszenario umfassen.

11. Vorrichtung (420, 710, 1110) nach Anspruch 10, wobei die Vielzahl von Einstellparametern einen Separator-Versatzparameter zum Ändern eines y-Achsenwerts des Separators umfasst, und
wobei die Vorgänge ferner umfassen:
Empfangen von fünften Benutzerbedingungsinformationen (610, 620, 630, 1112, 1210, 1220, 1230) des Benutzers (110) zum Ändern des Separator-Versatzparameters,
Korrigieren von Werten des Graphen (820, 920, 1020), der darstellt, ob eine Abweichung von der Pfadlinie auftritt, als Reaktion auf die empfangenen fünften Benutzerbedingungsinformationen (610, 620, 630, 1112, 1210, 1220, 1230) des Benutzers (110),
Bestimmen, auf Grundlage des korrigierten Werts des Graphen (820, 920, 1020), der darstellt, ob eine Abweichung von der Pfadlinie auftritt, ob das Pfadlinienabweichungs-Defektszenario behoben ist; und
nach dem Bestimmen, dass das Pfadlinienabweichungs-Defektszenario behoben ist, Durchführen einer Testbewertung des Benutzerkontos für das Pfadlinienabweichungs-Defektszenario.

12. Vorrichtung (420, 710, 1110) nach Anspruch 1, wobei die Vorgänge ferner umfassen:
Bestimmen, ob die Vielzahl von Defektszenarien (510, 520, 530), die der Fehlfunktion der 3D-L&S-Vorrichtung zugeordnet sind, durch das Benutzerkonto behoben worden sind; und
nach dem Bestimmen, dass die Vielzahl von Defektszenarien (510, 520, 530) durch das Benutzerkonto behoben worden sind, Bestimmen, ob der Benutzer (110) den Test auf Grundlage von Betriebsfähigkeitsinformationen (610, 620, 630, 1112, 1210, 1220, 1230) des Benutzerkontos besteht, die entsprechend jedem der Defektszenarien (510, 520, 530), die in der Vielzahl von Defektszenarien (510, 520, 530) enthalten sind, erzeugt wurden.

13. Laminator-Simulationsverfahren zur Herstellung von Sekundärbatterien, wobei das Verfahren (1300, 1400) durch zumindest einen Prozessor durchgeführt wird, wobei das Verfahren (1300, 1400) umfasst:
a) Empfangen (S1320) von Informationen (610, 620, 630, 1112, 1210, 1220, 1230), die einem Benutzerkonto eines Benutzers (110) zugeordnet sind, der eine Simulationsvorrichtung (100) zur Herstellung von Sekundärbatterien verwendet;
b) wenn die dem Benutzerkonto zugeordneten Informationen (610, 620, 630, 1112, 1210, 1220, 1230) empfangen werden, Ausführen (S1310, S1340) einer Softwaremodul-Vorrichtungsbedieneinheit (130, 210), die eine 3D-Laminier- und Stapelvorrichtung (L&S) (420, 710, 1110) in Bezug auf die Herstellung von Sekundärbatterien umfasst, einer Softwaremodul-Anlagenbedieneinheit (120), die eine Vielzahl von Einstellparametern zum Bestimmen des Betriebs der 3D-L&S-Vorrichtung umfasst, und einer Softwaremodul-Qualitätsprüfeinheit (140, 140_1, 140_2), die Qualitätsinformationen bezüglich der Qualität einer von der 3D-L&S-Vorrichtung hergestellten Monozelle umfasst;
c) Erlangen (S1320, S1410) zumindest einer Information aus ersten Benutzeraktionsinformationen, die über die Vorrichtungsbedieneinheit (130, 210) erlangt werden, wobei die Benutzeraktionsinformationen eine Benutzereingabe umfassen, wie etwa eine Berührungseingabe, eine Zieheingabe, eine Pinch-Eingabe und eine Rotationseingabe, die an zumindest einem Teil der 3D-L&S-Vorrichtung vorgenommen wird, oder Informationen entsprechen können, die durch einen beliebigen Algorithmus erzeugt werden, der auf Grundlage der entsprechenden Benutzereingabe vorbestimmt ist, oder ersten Benutzerbedingungsinformationen entsprechen können, die über die Anlagenbedieneinheit (120) erlangt werden, wobei die Benutzerbedingungsinformationen eine Benutzereingabe umfassen, die zumindest einen Teil von Bedingungen und/oder Werten unter den Einstellparametern festlegt oder modifiziert, oder Informationen entsprechen, die durch einen beliebigen Algorithmus erzeugt werden, der auf Grundlage der entsprechenden Benutzereingabe vorbestimmt ist;
d) Bestimmen (S1330) eines Betriebs der 3D-L&S-Vorrichtung auf Grundlage zumindest einer der ersten Benutzeraktionsinformationen oder der ersten Benutzerbedingungsinformationen; und
e) Ausführen (S1340, S1450, S1510) eines Vorgangs zum Versiegeln und Schneiden einer Vielzahl von Elektroden und Separatoren, die mit der 3D-L&S-Vorrichtung in Zusammenhang stehen, auf Grundlage des bestimmten Betriebs der 3D-L&S-Vorrichtung;
f1) Empfangen einer Testanforderung hinsichtlich der Betriebsfähigkeit der 3D-L&S-Vorrichtung von dem Benutzer (110),
f2) bei Empfangen der Testanforderung, Bestimmen eines oder mehrerer Defektszenarien (510, 520, 530) aus einer Vielzahl von Defektszenarien (510, 520, 530), die mit einer Fehlfunktion der 3D-L&S-Vorrichtung in Zusammenhang stehen,
f3) Modifizieren, auf Grundlage eines oder mehrerer der bestimmten Defektszenarien (510, 520, 530), des Betriebs der 3D-L&S-Vorrichtung und/oder der Qualitätsinformationen bezüglich der Qualität der Monozelle; und
g1) Kommunizieren mit einer externen Vorrichtung zur Herstellung von Sekundärbatterien (1110) und einer Defektszenario-DB (1120); wobei
g2) bei Auftreten einer Fehlfunktion in der externen Vorrichtung zur Herstellung von Sekundärbatterien (1110), Empfangen (S1610) von Fehlerinformationen (1112) durch die Simulationsvorrichtung (100) bezüglich der Fehlfunktion von der externen Vorrichtung zur Herstellung von Sekundärbatterien (1110), wobei die Fehlerinformationen (1112) Betriebsinformationen der externen Vorrichtung zur Herstellung von Sekundärbatterien (1110) beim Auftreten der Fehlfunktion und einen Qualitätsänderungsgrad eines von der externen Vorrichtung zur Herstellung von Sekundärbatterien (1110) erzeugten Materials umfassen; und
g3) Bestimmen der Bedingungswerte und Einstellwerte der 3D-L&S-Vorrichtung und/oder jedes Qualitätsparameterwerts der Qualitätsinformationen durch die Simulationsvorrichtung (100) und Erzeugen (1620) eines Defektszenarios (1122), das die Bedingungswerte und die Einstellwerte der bestimmten 3D-L&S-Vorrichtung und/oder die Qualitätsparameterwerte aufweist, um auf die entsprechenden Fehlerinformationen (1112) zu reagieren; und
g4) Speichern des erzeugten Defektszenarios (1122) in der Defektszenario-DB (1120); g51) wobei der Prozessor die Betriebsinformationen der externen Vorrichtung zur Herstellung von Sekundärbatterien (1110) in einen ersten Parametersatz umwandelt, der sich auf den Betrieb der 3D-L&S-Vorrichtung bezieht, und den Qualitätsänderungsgrad einer von der externen Vorrichtung zur Herstellung von Sekundärbatterien (1110) erzeugten Monozelle in einen zweiten Parametersatz umwandelt, der sich auf die Qualitätsinformationen bezüglich der Qualität einer von der 3D-L&S-Vorrichtung erzeugten Monozelle bezieht, und der Prozessor anschließend unter Verwendung des umgewandelten ersten Parametersatzes und des umgewandelten zweiten Parametersatzes eine Kategorie einer in der externen Vorrichtung zur Herstellung von Sekundärbatterien (1110) auftretenden Fehlfunktion bestimmt und das Defektszenario auf Grundlage der bestimmten Kategorie, des ersten Parametersatzes und des zweiten Parametersatzes erzeugt; und
g52) wobei die in den Qualitätsinformationen enthaltenen Qualitätsparameterwerte Werte eines Graphen der Tap-Position der Kathode (TPC) oder der Tap-Position der Anode (TPA) sind, der für den Fall eines Schneiddefektszenarios eine Schneidposition anzeigt, oder Werte eines Graphen sind, der darstellt, ob für den Fall eines x-Achsen-Nichtübereinstimmungs-Defektszenarios eine x-Achsen-Übereinstimmung vorgenommen wird, oder Werte eines Graphen sind, der darstellt, ob für den Fall eines y-Achsen-Nichtübereinstimmungs-Defektszenarios eine y-Achsen-Übereinstimmung vorgenommen wird, und/oder Werte eines Graphen sind, der darstellt, ob für den Fall eines Pfadlinienabweichungs-Defektszenarios eine Abweichung von einer Pfadlinie auftritt.

14. Verfahren (1300, 1400) nach Anspruch 13, ferner umfassend:
Bestimmen eines oder mehrerer Qualitätsparameter zum Bestimmen der Qualität der von der 3D-L&S-Vorrichtung hergestellten Monozelle;
bei Ausführen des Betriebs der 3D-L&S-Vorrichtung, Berechnen (S1510) eines Werts, der jedem einzelnen der einen oder mehreren Qualitätsparameter entspricht, die auf Grundlage des Betriebs der ausgeführten 3D-L&S-Vorrichtung bestimmt wurden; und
Erzeugen von Qualitätsinformationen bezüglich der Qualität der von der 3D-L&S-Vorrichtung hergestellten Monozelle auf Grundlage des berechneten Werts, der jedem einzelnen der einen oder mehreren Qualitätsparameter entspricht.

15. Verfahren (1300, 1400) nach Anspruch 13, ferner umfassend:
Bestimmen der Bedingungswerte und Einstellwerte der 3D-Modellvorrichtung und/oder jedes Qualitätsparameterwerts der Qualitätsinformationen und Erzeugen des Defektszenarios (1122) als Reaktion auf die Fehlerinformationen (1112) unter Verwendung eines Algorithmus zum Erzeugen eines Defektszenarios (1122) und/oder eines trainierten Modells für maschinelles Lernen.

16. Verfahren (1300, 1400) nach Anspruch 13, ferner umfassend:
Bestimmen (S1550), ob die Vielzahl von Defektszenarien (510, 520, 530), die einer Fehlfunktion der 3D-L&S-Vorrichtung zugeordnet sind, durch das Benutzerkonto behoben worden sind; und
nach dem Bestimmen (S1550), dass die Vielzahl von Defektszenarien (510, 520, 530) durch das Benutzerkonto behoben worden sind, Bestimmen, ob der Benutzer (110) den Test auf Grundlage von Betriebsfähigkeitsinformationen (610, 620, 630, 1112, 1210, 1220, 1230) des Benutzerkontos besteht, die entsprechend jedem der Defektszenarien (510, 520, 530), die in der Vielzahl von Defektszenarien (510, 520, 530) enthalten sind, erzeugt wurden.

17. Nichttransitorisches computerlesbares Medium, das Anweisungen zum Ausführen eines Laminator-Simulationsverfahrens zur Herstellung von Sekundärbatterien speichert, wobei die Anweisungen, wenn sie durch einen oder mehrere Prozessoren der Simulationsvorrichtung nach den Ansprüchen 1 bis 12 ausgeführt werden, den einen oder die mehreren Prozessoren dazu veranlassen, ein Verfahren (1300, 1400) nach einem oder mehreren der Ansprüche 13 bis 16 durchzuführen.

## Revendications

1. Dispositif de simulation (100) pour la production de batteries secondaires, ledit dispositif de simulation (100) comprenant :
i) une mémoire (1720) configurée pour stocker au moins une instruction ; et
ii) au moins un processeur (1710) configuré pour exécuter ladite au moins une instruction stockée en mémoire (1720) afin d'effectuer des opérations comprenant :
a) la réception (S1320) d'informations (610, 620, 630, 1112, 1210, 1220, 1230) associées à un compte d'un utilisateur (110) du dispositif de simulation (100) pour la production de batteries secondaires ;
b) à réception des informations (610, 620, 630, 1112, 1210, 1220, 1230) associées au compte d'utilisateur, l'exécution (S1310, S1340) d'une unité d'exploitation de dispositif à module logiciel (130, 210) comprenant un dispositif de laminage et d'empilage 3D (L&S) (420, 710, 1110) associé à la production de batteries secondaires, une unité d'exploitation d'installation à module logiciel (120) comprenant une pluralité de paramètres de réglage pour déterminer une opération du dispositif L&S 3D, et une unité de contrôle de qualité à module logiciel (140, 140_1, 140_2) comprenant des informations de qualité relatives à la qualité d'une mono-cellule produite par le dispositif L&S 3D,
c) l'obtention (S1320, S1410) de premières informations d'action d'utilisateur obtenues par l'unité d'exploitation de dispositif (130, 210), lesdites informations d'action d'utilisateur comprenant une entrée d'utilisateur telle qu'une entrée tactile, une entrée par glissement, une entrée par pincement, et une entrée par rotation exécutées sur au moins une partie du dispositif L&S 3D ou pouvant correspondre à des informations générées par un algorithme arbitraire prédéterminé sur la base de l'entrée d'utilisateur correspondante, et/ou de premières informations d'état d'utilisateur obtenues par l'unité d'exploitation d'installation (120), lesdites informations d'état d'utilisateur comprenant une entrée d'utilisateur établissant ou modifiant au moins une partie des conditions et/ou des valeurs parmi des paramètres de réglage, ou correspondant à des informations générées par un algorithme arbitraire prédéterminé sur la base de l'entrée d'utilisateur correspondante,
d) la détermination (S1330) d'une opération du dispositif L&S 3D sur la base des premières informations d'action d'utilisateur et/ou des premières informations d'état d'utilisateur, et
e) l'exécution (S1340, S1450, S1510) d'une opération de scellement et de découpe d'une pluralité d'électrodes et de séparateurs associés au dispositif L&S 3D sur la base de l'opération déterminée du dispositif L&S 3D ;
où les opérations comprennent en outre :
f1) la réception d'une demande de test de capacité fonctionnelle du dispositif L&S 3D provenant de l'utilisateur (110),
f2) à réception de la demande de test, la détermination d'un ou de plusieurs scénarios de défaut (510, 520, 530) parmi une pluralité de scénarios de défaut (510, 520, 530) relatifs à un dysfonctionnement du dispositif L&S 3D,
f3) la modification du fonctionnement du dispositif L&S 3D et/ou des informations de qualité relatives à la qualité de la mono-cellule sur la base du ou des scénarios de défaut déterminés (510, 520, 530) ; et
g1) la communication (S1610) avec un dispositif de production de batterie secondaire externe (1110) et une base de données de scénarios de défauts (1120) ; où,
g2) si un dysfonctionnement survient dans le dispositif de production de batterie secondaire externe (1110), le dispositif de simulation (100) est adapté pour recevoir (S1610) des informations d'erreur (1112) relatives au dysfonctionnement provenant du dispositif de production de batterie secondaire externe (1110), lesdites informations d'erreur (1112) comprenant des informations de fonctionnement du dispositif de production de batterie secondaire externe (1110) à la survenue du dysfonctionnement et un niveau de changement de qualité d'un matériel généré par le dispositif de production de batterie secondaire externe (1110) ; et
g3) la détermination, par le dispositif de simulation (100), de valeurs d'état et de valeurs de réglage du dispositif L&S 3D et/ou de chaque valeur de paramètre de qualité des informations de qualité, et la génération (1620) d'un scénario de défaut (1122) ayant les valeurs d'état et les valeurs de réglage du dispositif L&S 3D déterminé et/ou les valeurs de paramètre de qualité pour répondre aux informations d'erreur correspondantes (1112) ; et
g4) la mémorisation du scénario de défaut généré (1122) dans la base de données de scénarios de défaut (1120) ;
g51) où le processeur convertit les informations de fonctionnement du dispositif de production de batterie secondaire externe (1110) en un premier ensemble de paramètres relatifs au fonctionnement du dispositif L&S 3D et convertit le niveau de changement de qualité d'une mono-cellule générée par le dispositif de production de batterie secondaire externe (1110) en un deuxième ensemble de paramètres relatifs aux informations de qualité associées à la qualité d'une mono-cellule générée par le dispositif L&S 3D, le processeur déterminant ensuite une catégorie d'un dysfonctionnement survenant dans le dispositif de production de batterie secondaire externe (1110) au moyen du premier ensemble de paramètres et du deuxième ensemble de paramètres convertis, et générant le scénario de défaut sur la base de la catégorie déterminée, du premier ensemble de paramètres, et du deuxième ensemble de paramètres ; et
g52) où les valeurs de paramètre de qualité comprises dans les informations de qualité sont des valeurs d'un graphique d'une cathode de position de prise, TPC, ou d'une anode de position de prise, TPA, indiquant une position de découpe dans le cas d'un scénario de défaut de découpe, ou d'un graphique représentant si une correspondance d'axe x est réalisée dans le cas d'un scénario de défaut de non-correspondance d'axe x, ou d'un graphique représentant si une correspondance d'axe y est réalisée dans le cas d'un scénario de défaut de non-correspondance d'axe y, et/ou d'un graphique représentant si une déviation par rapport à une ligne de trajet survient dans le cas d'un scénario de défaut de déviation de ligne de trajet.

2. Dispositif (420, 710, 1110) selon la revendication 1, où les opérations comprennent en outre :
la détermination d'un ou de plusieurs paramètres de qualité pour déterminer la qualité de la mono-cellule produite par le dispositif L&S 3D ;
à l'exécution de l'opération du dispositif L&S 3D, le calcul (S1510) d'une valeur correspondant à chacun des paramètres de qualité déterminés sur la base de l'opération du dispositif L&S 3D exécuté ; et
la génération d'informations de qualité relatives à la qualité de la mono-cellule produite par le dispositif L&S 3D sur la base de la valeur calculée correspondant à chacun des paramètres de qualité.

3. Dispositif selon la revendication 1, où :
ledit dispositif de simulation (100) est adapté pour déterminer les valeurs d'état et les valeurs de réglage du dispositif de modèle 3D et/ou chaque valeur de paramètre de qualité des informations de qualité et générer le scénario de défaut (1122) afin de répondre aux informations d'erreur (1112) au moyen d'un algorithme pour générer un scénario de défaut (1122) et/ou d'un modèle d'apprentissage automatique entraîné.

4. Dispositif (420, 710, 1110) de la revendication 1, où la pluralité de scénarios de défaut (510, 520, 530) comprend le scénario de défaut de découpe, et où les opérations comprennent en outre :
la modification d'une valeur d'au moins un graphique (820, 920, 1020) de cathode de position de prise (TPC) (820, 920, 1020) ou d'anode de position de prise (TPA) (820, 920, 1020) indiquant une position de découpe, comprise dans les informations de qualité, en une plage de défaut et la modification d'au moins une zone partielle comprise dans une image de découpe en une zone prédéterminée indiquant un défaut de découpe, si le ou les scénarios de défauts déterminés (510, 520, 530) comprennent le scénario de défaut de découpe.

5. Dispositif (420, 710, 1110) selon la revendication 4, où la pluralité de paramètres de réglage comprend un paramètre de décalage de découpe relatif à une synchronisation de découpe du dispositif L&S 3D, et
où les opérations comprennent en outre :
la réception (1510) de deuxièmes informations d'état (610, 620, 630, 1112, 1210, 1220, 1230) d'utilisateur (110) sur la modification d'une valeur du paramètre de décalage de découpe,
la correction (S1520) de l'image de découpe et la valeur dudit au moins un graphique (820, 920, 1020), du graphique TPC ou du graphique TPA en réponse aux deuxièmes informations d'état (610, 620, 630, 1112, 1210, 1220, 1230) d'utilisateur (110) reçues,
la détermination, sur la base de l'image de découpe corrigée et de la valeur corrigée dudit au moins un graphique (820, 920, 1020), du graphique TPC ou du graphique TPA, si le scénario de défaut de découpe est résolu, et,
s'il est déterminé que le défaut de découpe est résolu, l'exécution d'une évaluation de test du compte d'utilisateur pour le scénario de défaut de découpe.

6. Dispositif (420, 710, 1110) selon la revendication 1, où la pluralité de scénarios de défaut (510, 520, 530) comprend le scénario de défaut de non-correspondance d'axe x, et où les opérations comprennent en outre :
la modification d'une image de correspondance d'axe x et de valeurs d'un graphique (820, 920, 1020) représentant si une correspondance d'axe x est réalisée, comprises dans les informations de qualité, pour qu'elles soient comprises dans une plage de défaut si le ou les scénarios de défauts déterminés (510, 520, 530) comprennent le scénario de défaut de non-correspondance d'axe x.

7. Dispositif (420, 710, 1110) selon la revendication 6, où la pluralité de paramètres de réglage comprend un paramètre de décalage d'axe x pour modifier une valeur d'axe x d'au moins une partie d'une électrode supérieure et d'une électrode inférieure comprises dans la pluralité d'électrodes et les séparateurs, et
où les opérations comprennent en outre :
la réception de troisièmes informations d'état (610, 620, 630, 1112, 1210, 1220, 1230) d'utilisateur (110) sur la modification du paramètre de décalage d'axe x,
la correction de l'image de correspondance d'axe x et des valeurs du graphique (820, 920, 1020) représentant si la correspondance d'axe x est réalisée en réponse aux troisièmes informations d'état (610, 620, 630, 1112, 1210, 1220, 1230) d'utilisateur (110) reçues,
la détermination, sur la base de l'image de correspondance d'axe x corrigée et des valeurs corrigées du graphique (820, 920, 1020) représentant si une correspondance d'axe x est réalisée, si le scénario de défaut de non-correspondance d'axe x a été résolu, et,
s'il est déterminé que le scénario de défaut de non-correspondance d'axe x est résolu, l'exécution d'une évaluation de test du compte d'utilisateur pour le scénario de défaut de non-correspondance d'axe x.

8. Dispositif (420, 710, 1110) selon la revendication 1, où la pluralité de scénarios de défaut (510, 520, 530) comprend le scénario de défaut de non-correspondance d'axe y, et
où les opérations comprennent en outre :
le modification d'une image de correspondance d'axe y et de valeurs d'un graphique (820, 920, 1020) représentant si la correspondance d'axe y est réalisée, comprises dans les informations de qualité, pour qu'elles soient comprises dans une plage de défaut si le ou les scénarios de défauts déterminés (510, 520, 530) comprennent le scénario de défaut de non-correspondance d'axe y.

9. Dispositif (420, 710, 1110) selon la revendication 8, où la pluralité de paramètres de réglage comprend un paramètre de décalage d'axe y (1010) pour modifier une valeur d'axe y d'au moins une partie d'une électrode supérieure et d'une électrode inférieure comprises dans la pluralité d'électrodes et d'un séparateur supérieur et d'un séparateur inférieur compris dans les séparateurs, et
où les opérations comprennent en outre :
la réception de quatrièmes informations d'état (610, 620, 630, 1112, 1210, 1220, 1230) d'utilisateur (110) sur la modification du paramètre de décalage d'axe y (1010),
la correction de l'image de correspondance d'axe y et des valeurs du graphique (820, 920, 1020) représentant si la correspondance d'axe y est réalisée en réponse aux quatrièmes informations d'état (610, 620, 630, 1112, 1210, 1220, 1230) d'utilisateur (110) reçues,
la détermination, sur la base de l'image de correspondance d'axe y corrigée et des valeurs corrigées du graphique (820, 920, 1020) représentant si une correspondance d'axe y est réalisée, si le scénario de défaut de non-correspondance d'axe y a été résolu, et
s'il est déterminé que le scénario de défaut de non-correspondance d'axe y est résolu, l'exécution d'une évaluation de test du compte d'utilisateur pour le scénario de défaut de non-correspondance d'axe y.

10. Dispositif (420, 710, 1110) selon la revendication 1, où la pluralité de scénarios de défaut (510, 520, 530) comprend le scénario de défaut de déviation de ligne de trajet où le séparateur dévie d'une ligne de trajet, et
où les opérations comprennent en outre :
la modification des valeurs d'un graphique (820, 920, 1020) représentant si une déviation par rapport à la ligne de trajet survient, comprises dans les informations de qualité, pour qu'elles soient comprises dans une plage de défaut si le ou les scénarios de défauts déterminés (510, 520, 530) comprennent le scénario de défaut de déviation de ligne de trajet.

11. Dispositif (420, 710, 1110) selon la revendication 10, où la pluralité de paramètres de réglage comprend un paramètre de décalage de séparateur pour modifier une valeur d'axe y du séparateur, et
où les opérations comprennent en outre :
la réception de cinquièmes informations d'état (610, 620, 630, 1112, 1210, 1220, 1230) d'utilisateur sur la modification du paramètre de décalage de séparateur,
la correction de valeurs du graphique (820, 920, 1020) représentant si une déviation par rapport à la ligne de trajet survient en réponse aux cinquièmes informations d'état (610, 620, 630, 1112, 1210, 1220, 1230) d'utilisateur (110) reçues,
la détermination, sur la base de la valeur corrigée du graphique (820, 920, 1020) représentant si une déviation par rapport à la ligne de trajet survient, si le scénario de défaut de déviation de ligne de trajet est résolu, et,
s'il est déterminé que le scénario de défaut de déviation de ligne de trajet est résolu, l'exécution d'une évaluation de test du compte d'utilisateur pour le scénario de défaut de déviation de ligne de trajet.

12. Dispositif (420, 710, 1110) selon la revendication 1, où les opérations comprennent en outre :
la détermination si la pluralité de scénarios de défaut (510, 520, 530) associés au dysfonctionnement du dispositif L&S 3D sont résolus par le compte d'utilisateur, et,
s'il est déterminé que la pluralité de scénarios de défaut (510, 520, 530) sont résolus par le compte d'utilisateur, la détermination si l'utilisateur (110) réussit le test sur la base des informations de capacité fonctionnelle (610, 620, 630, 1112, 1210, 1220, 1230) du compte d'utilisateur généré correspondant à chacun des scénarios de défaut (510, 520, 530) compris dans la pluralité de scénarios de défaut (510, 520, 530).

13. Procédé de simulation de presse à laminer pour la production de batteries secondaires, ledit procédé (1300, 1400) étant exécuté par au moins un processeur, ledit procédé (1300, 1400) comprenant :
a) la réception (S1320) d'informations (610, 620, 630, 1112, 1210, 1220, 1230) associées à un compte d'un utilisateur (110) du dispositif de simulation (100) pour la production de batteries secondaires ;
b) à réception des informations (610, 620, 630, 1112, 1210, 1220, 1230) associées au compte d'utilisateur, l'exécution (S1310, S1340) d'une unité d'exploitation de dispositif à module logiciel (130, 210) comprenant un dispositif de laminage et d'empilage 3D (L&S) (420, 710, 1110) associé à la production de batteries secondaires, une unité d'exploitation d'installation à module logiciel (120) comprenant une pluralité de paramètres de réglage pour déterminer une opération du dispositif L&S 3D, et une unité de contrôle de qualité à module logiciel (140, 140_1, 140_2) comprenant des informations de qualité relatives à la qualité d'une mono-cellule produite par le dispositif L&S 3D,
c) l'obtention (S1320, S1410) de premières informations d'action d'utilisateur obtenues par l'unité d'exploitation de dispositif (130, 210), lesdites informations d'action d'utilisateur comprenant une entrée d'utilisateur telle qu'une entrée tactile, une entrée par glissement, une entrée par pincement, et une entrée par rotation exécutées sur au moins une partie du dispositif L&S 3D ou pouvant correspondre à des informations générées par un algorithme arbitraire prédéterminé sur la base de l'entrée d'utilisateur correspondante, et/ou de premières informations d'état d'utilisateur obtenues par l'unité d'exploitation d'installation (120), lesdites informations d'état d'utilisateur comprenant une entrée d'utilisateur établissant ou modifiant au moins une partie des conditions et/ou des valeurs parmi des paramètres de réglage, ou correspondant à des informations générées par un algorithme arbitraire prédéterminé sur la base de l'entrée d'utilisateur correspondante,
d) la détermination (S1330) d'une opération du dispositif L&S 3D sur la base des premières informations d'action d'utilisateur et/ou des premières informations d'état d'utilisateur, et
e) l'exécution (S1340, S1450, S1510) d'une opération de scellement et de découpe d'une pluralité d'électrodes et de séparateurs associés au dispositif L&S 3D sur la base de l'opération déterminée du dispositif L&S 3D ;
f1) la réception d'une demande de test de capacité fonctionnelle du dispositif L&S 3D provenant de l'utilisateur (110),
f2) à réception de la demande de test, la détermination d'un ou de plusieurs scénarios de défaut (510, 520, 530) parmi une pluralité de scénarios de défaut (510, 520, 530) relatifs à un dysfonctionnement du dispositif L&S 3D,
f3) la modification du fonctionnement du dispositif L&S 3D et/ou des informations de qualité relatives à la qualité de la mono-cellule sur la base du ou des scénarios de défaut déterminés (510, 520, 530) ; et
g1) la communication avec un dispositif de production de batterie secondaire externe (1110) et une base de données de scénarios de défauts (1120) ; où
g2) si un dysfonctionnement survient dans le dispositif de production de batterie secondaire externe (1110), la réception (S1610) par le dispositif de simulation (100) d'informations d'erreur (1112) relatives au dysfonctionnement provenant du dispositif de production de batterie secondaire externe (1110), lesdites informations d'erreur (1112) comprenant des informations de fonctionnement du dispositif de production de batterie secondaire externe (1110) à la survenue du dysfonctionnement et un niveau de changement de qualité d'un matériel généré par le dispositif de production de batterie secondaire externe (1110) ; et
g3) la détermination, par le dispositif de simulation (100), de valeurs d'état et de valeurs de réglage du dispositif L&S 3D et/ou de chaque valeur de paramètre de qualité des informations de qualité, et la génération (1620) d'un scénario de défaut (1122) ayant les valeurs d'état et les valeurs de réglage du dispositif L&S 3D déterminé et/ou les valeurs de paramètre de qualité pour répondre aux informations d'erreur correspondantes (1112) ; et g4) la mémorisation du scénario de défaut généré (1122) dans la base de données de scénarios de défaut (1120) ;
g51) où le processeur convertit les informations de fonctionnement du dispositif de production de batterie secondaire externe (1110) en un premier ensemble de paramètres relatifs au fonctionnement du dispositif L&S 3D et convertit le niveau de changement de qualité d'une mono-cellule générée par le dispositif de production de batterie secondaire externe (1110) en un deuxième ensemble de paramètres relatifs aux informations de qualité associées à la qualité d'une mono-cellule générée par le dispositif L&S 3D, le processeur déterminant ensuite une catégorie d'un dysfonctionnement survenant dans le dispositif de production de batterie secondaire externe (1110) au moyen du premier ensemble de paramètres et du deuxième ensemble de paramètres convertis, et générant le scénario de défaut sur la base de la catégorie déterminée, du premier ensemble de paramètres, et du deuxième ensemble de paramètres ; et
g52) où les valeurs de paramètre de qualité comprises dans les informations de qualité sont des valeurs d'un graphique d'une cathode de position de prise, TPC, ou d'une anode de position de prise, TPA, indiquant une position de découpe dans le cas d'un scénario de défaut de découpe, ou d'un graphique représentant si une correspondance d'axe x est réalisée dans le cas d'un scénario de défaut de non-correspondance d'axe x, ou d'un graphique représentant si une correspondance d'axe y est réalisée dans le cas d'un scénario de défaut de non-correspondance d'axe y, et/ou d'un graphique représentant si une déviation par rapport à une ligne de trajet survient dans le cas d'un scénario de défaut de déviation de ligne de trajet.

14. Procédé (1300, 1400) selon la revendication 13, comprenant en outre :
la détermination d'un ou de plusieurs paramètres de qualité pour déterminer la qualité de la mono-cellule produite par le dispositif L&S 3D ;
à l'exécution de l'opération du dispositif L&S 3D, le calcul (S1510) d'une valeur correspondant à chacun des paramètres de qualité déterminés sur la base de l'opération du dispositif L&S 3D exécuté ; et
la génération d'informations de qualité relatives à la qualité de la mono-cellule produite par le dispositif L&S 3D sur la base de la valeur calculée correspondant à chacun des paramètres de qualité.

15. Procédé (1300, 1400) selon la revendication 13, comprenant en outre :
la détermination des valeurs d'état et des valeurs de réglage du dispositif de modèle 3D et/ou de chaque valeur de paramètre de qualité des informations de qualité et la génération du scénario de défaut (1122) afin de répondre aux informations d'erreur (1112) au moyen d'un algorithme pour générer un scénario de défaut (1122) et/ou d'un modèle d'apprentissage automatique entraîné.

16. Procédé (1300, 1400) selon la revendication 13, comprenant en outre :
la détermination (S1550) si la pluralité de scénarios de défaut (510, 520, 530) associés à un dysfonctionnement du dispositif L&S 3D sont résolus par le compte d'utilisateur, et
s'il est déterminé (S1550) que la pluralité de scénarios de défaut (510, 520, 530) sont résolus par le compte d'utilisateur, la détermination si l'utilisateur (110) réussit le test sur la base des informations de capacité fonctionnelle (610, 620, 630, 1112, 1210, 1220, 1230) du compte d'utilisateur généré correspondant à chacun des scénarios de défaut (510, 520, 530) compris dans la pluralité de scénarios de défaut (510, 520, 530).

17. Support d'enregistrement non transitoire lisible par ordinateur stockant des instructions pour exécuter un procédé de simulation de presse à laminer pour la production de batteries secondaires, l'exécution desdites instructions par un ou plusieurs processeurs du dispositif de simulation selon les revendications 1 à 12 entraînant la mise en œuvre par le ou les processeurs d'un procédé (1300, 1400) selon l'une ou plusieurs des revendications 13 à 16.
